# EUROPÄISCHE PATENTSCHRIFT

(11) **EP 3 686 163 B1**
(45) Veröffentlichungstag und Bekanntmachung des Hinweises auf die Patenterteilung: **12.08.2026**
(21) Anmeldenummer: 19195673.9
(22) Anmeldetag: 05.09.2019
(51) Int. Cl.: C03B 5/185, C03B 5/04, C03B 5/225

(54) **SCHMELZWANNE FÜR DIE HERSTELLUNG EINER GLASSCHMELZE**
TANK FOR MANUFACTURING GLASS MELT
BASSIN POUR LA FUSION DU VERRE

(30) Priorität: 28.09.2018 DE 102018124075
(43) Veröffentlichungstag der Anmeldung: 29.07.2020
(73) Patentinhaber: Beteiligungen Sorg GmbH & Co. KG, 97816 Lohr am Main (DE)
(72) Erfinder: Sorg, Helmut, 63864 Glattbach (DE); Sorg, Alexander, 63739 Aschaffenburg (DE); Lindig, Matthias, 55218 Ingelheim (DE)
(74) Vertreter: WSL Patentanwälte Partnerschaft mbB

(56) Entgegenhaltungen:
- EP-A1- 0 410 338
- EP-A1- 0 949 210
- EP-A1- 3 760 595
- DE-C1- 19 710 351
- US-A- 2 254 079
- US-A- 4 852 118

## Beschreibung

Die Erfindung betrifft eine Schmelzwanne für die Herstellung einer Glasschmelze aus mindestens einem festen Ausgangsstoff mit einer Eingangsöffnung für die Zuführung des mindestens einen Ausgangsstoffs, einer Ausgangsöffnung zum Abfließen des geschmolzenen Glases, wobei die Schmelzwanne derart eingerichtet ist, dass die Glasschmelze während des Schmelzprozesses in eine Fließrichtung von der Eingangsöffnung zur Ausgangsöffnung fließt, einem die Schmelzwanne unten begrenzenden Boden, mindestens zwei, an den Boden angrenzenden, die Schmelzwanne seitlich begrenzenden Seitenwänden und einer mit den Seitenwänden verbundenen, die Schmelzwanne oben begrenzenden Überdachung, wobei die Schmelzwanne einen Einschmelzabschnitt und einen Läuterabschnitt aufweist, wobei das Glas bei seinem Fließen in Fließrichtung zuerst den Einschmelzabschnitt und danach den Läuterabschnitt passiert. Die Erfindung betrifft ferner eine Glasschmelzanlage mit einer derartigen Schmelzwanne sowie ein Verfahren zur Herstellung einer Glasschmelze in einer derartigen Schmelzwanne.

Für die kontinuierliche Herstellung der Glasschmelze in größeren Mengen hat sich seit Ende des vorletzten Jahrhunderts die Wannentechnologie durchgesetzt. Dabei wird in eine Schmelzwanne vorgegebener Tiefe kontinuierlich der mindestens eine Ausgangsstoff dosiert aufgegeben. Hierbei wird in dem Einschmelzabschnitt der mindestens eine Ausgangsstoff aufgeschmolzen und in dem Läuterabschnitt eine Vielzahl der bei dem Aufschmelzen entstehenden Blasen entfernt. Bei der derzeit zumeist verwendeten fossilen Beheizung befindet sich über der Schmelze ein Verbrennungsraum, in dem fossiler Brennstoff unter Zufuhr eines Oxidanten verbrannt wird.

Die so hergestellten Gläser umfassen insbesondere die Gruppen Behälterglas, Flachglas, beispielsweise für Walzprozesse, und technische Gläser. Hinsichtlich ihrer Zusammensetzung umfassen derartige Gläser beispielsweise die Gruppe der Kalk-Natrongläser, der Borosilikatgläser und der Neutralgläser.

Der Klimaschutz wird in der nahen Zukunft einen Einfluss auf alle Arten industrieller Prozesse haben, in denen thermische Prozessschritte mit fossilem Energieeinsatz durchgeführt werden. Dies betrifft insbesondere auch die Herstellung von Glas, da die Herstellung der Glasschmelze sehr energieintensiv ist.

Als Ausgangsstoffe für die Glasherstellung werden primäre Rohstoffe wie Quarzsand, Soda, Kalk, Dolomit, Feldspat, Pottasche und gegebenenfalls Metallionen und dergl. sowie Scherben eingesetzt. Hierbei können Scherben aus dem Rücklauf fehlerhafter Produktionen stammen und/oder sogenannte Recyclingsscherben sein.

Die elektrische Energie wird für die Energieversorgung von technischen Anlagen wie Glasschmelzanlagen derzeit als eine Energieform angesehen, welche die aus fossilen Energieträgern gewonnene Energie ersetzen soll. Im Hinblick auf den Klimaschutz soll die elektrische Energie dabei klimaneutral erzeugt werden. Daher besteht der Wunsch, Schmelzwannen mittels elektrischer Energie zu beheizen.

Es hat sich gezeigt, dass eine ausschließliche Versorgung einer Glasschmelzanlage, insbesondere einer Schmelzwanne, mit elektrischer Energie, wie dies beispielsweise in der Druckschrift US 3,885,945 beschrieben ist, zu Problemen bei dem Schritt der Entgasung der Glasschmelze (Läuterung) führt. Bei der bekannten elektrischen Beheizung einer Schmelzwanne wird die Glasschmelze mittels Elektroden beheizt, die am Boden der Schmelzwanne oder in Seitenwänden angeordnet sind und in die Schmelze hineinragen. Bei einer derartigen Beheizung der Glasschmelze kann ein großer Teil der in der Glasschmelze entstehenden Blasen die Glasschmelze nicht verlassen. Sie verbleiben in der Glasschmelze und damit auch in dem aus der Glasschmelze hergestellten Produkt und verursachen dort Qualitätsprobleme. Dieses Problem tritt auch bei dem in der Druckschrift DE 197 10 351 C1 (Pieper) beschriebenen Glasschmelzofen und dem in dem Dokument EP 0 410 338 A1 (Müller) dargestellten Schmelzaggregat auf, wenn der Anteil an elektrischer Energie gegenüber der fossilen Beheizung erhöht wird. Bei den dort gezeigten Konstruktionen mit einer Läuterbank nach einer Stufe mit einer Reihe von Bodenelektroden bzw. mit einem hohen Bodenwall nach zwei Reihen auf dem Boden des Schmelzaggregats angeordneten Elektroden können Blasen nicht in ausreichendem Maße entweichen.

Bei dem aus EP 0 949 210 A1 bekannten Glasschmelzofen sind ebenfalls Heizelektroden auf einer der Läuterbank vorgelagerten Stufe angeordnet, welche niedriger als die in Fließrichtung der Glasschmelze dahinter liegende Läuterbank ist.

Ein aus US 4,852,118 bekannter Glasschmelzofen weist einen Schmelzbereich und einen Läuterbereich auf, wobei der Wannenboden entlang des Schmelzbereichs graduell ansteigt und dann in den Läuterbereich übergeht. Elektroden sollen im Bereich der Eingangsöffnung angeordnet sein, wo die Zuführung des Ausgangsstoffs für die Glasschmelze erfolgt, um eine Verfestigung des Ausgangsstoffs zu verhindern und das Aufschmelzen zu begünstigen. Lediglich im Läuterbereich ist eine fossile Beheizung mittels der Brenner vorgesehen. Im Läuterbereich wird mittels Bubblern eine Verwirbelung der Glasschmelze erzeugt, zu welcher auch Elektroden beitragen sollen. Diese Elektroden sollen zusammen mit dem Bubblern Gasblasen zur Verwirbelung erzeugen und sind im Läuterbereich angeordnet. Zudem scheint der Anteil elektrisch erzeugter Wärmeenergie bei dem aus US 4,852,118 bekannten Glasschmelzofen vergleichsweise klein zu sein.

Aus dem Dokument US 2,254,079 ist ein Glasschmelzofen mit einer Brückenstruktur am mittigen Boden bekannt, in der Kanäle mit Öffnungen vorgesehen sind, die zum Transport bzw. Einbringen von Gas in die Glasschmelze dienen. Ferner wird die Anordnung von leiterplattenförmigen Elektroden zur Beheizung in diesen Bereich erwähnt.

Die Aufgabe besteht somit darin, eine Schmelzwanne zu schaffen, die überwiegend mit elektrischer Energie versorgt wird und deren Glasschmelze beim Verlassen des Läuterabschnitts einen geringen Blasenanteil aufweist. Entsprechend besteht die Aufgabe weiter darin, eine Glasschmelzanlage mit einer derartigen Schmelzwanne zu schaffen. Ferner besteht die Aufgabe darin, ein Verfahren anzugeben, mit dem eine Glasschmelze unter überwiegender Versorgung mit elektrischer Energie hergestellt werden kann, wobei das Verfahren Glas mit einem geringen Blasenanteil erzeugt und energieeffizient arbeitet.

Die Aufgabe wird gelöst durch eine Schmelzwanne mit den in Anspruch 1 angegebenen Merkmalen.

Insbesondere weist bei der erfindungsgemäßen Schmelzwanne die Glasschmelze im Einschmelzabschnitt eine (minimale) erste Badtiefe B1 und im Läuterabschnitt eine (minimale) zweite Badtiefe B2 auf, wobei die erste (minimale) Badtiefe B1 das Minimum der gegebenenfalls variierenden Badtiefen im Einschmelzabschnitt und die zweite (minimale) Badtiefe B2 das Minimum der gegebenenfalls variierenden Badtiefen im Läuterabschnitt darstellt. In der weiteren Beschreibung wird die Angabe "minimal" oft weggelassen, es ist bei der ersten und der zweiten Badtiefe jeweils die minimale Badtiefe in dem jeweiligen Bereich gemeint. In einem Übergangsbereich der Schmelzwanne zwischen dem Einschmelzabschnitt und dem Läuterabschnitt ist eine quer zur Fließrichtung verlaufende Schwelle im Boden der Glasschmelzwanne angeordnet, wobei eine dritte Badtiefe B5 über der Schwelle kleiner als die erste Badtiefe B1 und kleiner als die zweite Badtiefe B2 ist, wobei die Schwelle die höchste Erhebung im Boden der Schmelzwanne mit der geringsten Badtiefe darstellt, wobei der Einschmelzabschnitt in Fließrichtung vor der Schwelle und der Läuterabschnitt in Fließrichtung hinter der Schwelle angeordnet ist. Bei der Ermittlung der jeweiligen minimalen Badtiefe B1 und B2 im Einschmelzabschnitt und im Läuterabschnitt wird die Badtiefe über der Schwelle nicht berücksichtigt.

Weiter ist die Schmelzwanne derart eingerichtet, dass zum Aufschmelzen des mindestens einen Ausgangsstoffs der Glasschmelze
- ein elektrisch erzeugter, erster Wärmeenergieanteil mittels einer Vielzahl in dem Boden und/ oder in den Seitenwänden der Schmelzwanne angeordneten und in die Glasschmelze hinein ragenden Elektroden und
- zusätzlich ein mittels Verbrennung von fossilem Brennstoff erzeugter zweiter Wärmeenergieanteil in mindestens einem in einer Seitenwand und/oder
in der Überdachung oberhalb der Glasschmelze angeordneten Brenner zugeführt wird, wobei die gesamte zugeführte Wärmeenergie sich aus dem ersten Wärmeenergieanteil und dem zweiten Wärmeenergieanteil zusammensetzt, wobei die Schmelzwanne derart eingerichtet ist, dass der erste Wärmeenergieanteil mindestens 30 % der gesamten zugeführten Wärmeenergie beträgt, wobei im Boden der Schmelzwanne in Fließrichtung der Glasschmelze auf der Schwelle eine quer zur Fließrichtung verlaufende erste Elektrodenreihe umfassend eine Vielzahl von Elektroden angeordnet ist,
wobei in dem Einschmelzabschnitt im Boden der Schmelzwanne eine Vielzahl von Elektroden in mindestens einer, in Fließrichtung verlaufenden dritten Elektrodenreihe angeordnet ist.

Als Seitenwände werden im Rahmen der vorliegenden Neuerung (d.h. für alle möglichen Ausführungsbeispiele) auch die Wände im Bereich der Eingangsöffnung und der Ausgangsöffnung angesehen, welche quer zur Fließrichtung verlaufen (d.h. die Vorderwand und die Rückwand).

In einem Ausführungsbeispiel kann der erste Wärmeenergieanteil mehr als 60 %, vorzugsweise mindestens 70%, und/oder höchstens 98 % der gesamten zugeführten Wärmeenergie betragen. Der restliche Wärmeenergieanteil wird mittels Verbrennung eines fossilen Brennstoffs erzeugt (zweiter Wärmeenergieanteil). Die erfindungsgemäße Schmelzwanne wird, wie oben dargestellt, mit einem zweiten Wärmeenergieanteil von höchstens 70 %, vorzugsweise von weniger als 40 %, besonders bevorzugt höchstens 30%, und/oder mindestens 2% mit Energie aus einem fossilen Energieträger versorgt. Es hat sich gezeigt, dass es erforderlich ist, einen solchen fossilen Wärmeenergieanteil vorzusehen, um den über der Glasschmelze liegenden Verbrennungsraum zu beheizen. Hierdurch ergibt sich eine Beheizung der Oberfläche der Glasschmelze, sodass ein Austreten der Blasen (Gaseinschlüsse) aus der Glasschmelze begünstigt wird. Nur wenn die Blasen die Glasschmelze tatsächlich verlassen, kann eine Qualitätsverbesserung erreicht werden.

Erfindungsgemäß wurde erkannt, dass es bei einem solchen Wärmeenergieanteil des fossilen Energieträgers erforderlich ist, im Bereich des Übergangs von dem Einschmelzabschnitt zu dem Läuterabschnitt im Boden der Schmelzwanne eine elektrisch beheizte Schwelle vorzusehen, die quer zur Fließrichtung des Glases in der Glasschmelze verläuft und eine Breite (d.h. eine Ausdehnung quer zur Fließrichtung des Glases) aufweist, die der Breite der Schmelzwanne an dieser Stelle entspricht. Die Schwelle nimmt daher die gesamte Breite der Schmelzwanne ein. In Fließrichtung auf der Schwelle ist zudem im Boden der Schmelzwanne eine quer zur Fließrichtung verlaufende erste Elektrodenreihe, die eine Vielzahl von Elektroden umfasst, angeordnet. Diese, elektrisch beheizte Schwelle bewirkt, dass Blasen aus tieferen Bereichen der Schmelze an die Oberfläche treten. Ferner verkürzt die Schwelle mit der erhöhten Temperatur den Weg der Blasen in Richtung Oberfläche der Glasschmelze. Durch die Temperaturerhöhung im Bereich der Schwelle wird ein Ausdehnen des Gases in den Blasen begünstigt, sodass die Blasen in ihrem Durchmesser wachsen und hierdurch die Auftriebsgeschwindigkeit erhöht wird, da sich nach dem Stoke'schen Gesetz die Aufstiegsgeschwindigkeit mit dem Quadrat des Radius' erhöht.

Im Rahmen der vorliegenden Erfindung wird als Stufe ein Absatz im Boden des jeweiligen Bereichs der Glasschmelzanlage verstanden, der abschnittsweise senkrecht oder schräg verläuft. Eine Stufe bewirkt eine Verringerung oder Erhöhung der Badtiefe in Bezug auf die davor liegende Badtiefe.

Erfindungsgemäß ist im Übergangsbereich zwischen Einschmelzabschnitt und Läuterabschnitt der Schmelzwanne eine Schwelle vorgesehen, wobei die erste Elektrodenreihe auf der Schwelle angeordnet ist. Die Schwelle ist gewissermaßen aus einer ersten Stufe und einer zweiten Stufe gebildet, die in Fließrichtung hinter der ersten Stufe liegt, wobei sich Badtiefe nach der ersten Stufe verringert, mit Badtiefe B5 bezeichnet wird und nach der zweiten Stufe wieder erhöht. Die Badtiefe B5 über der Schwelle ist kleiner als die Badtiefe im Einschmelzabschnitt und kleiner als die Badtiefe im Läuterabschnitt und stellt somit die höchste Erhebung im Boden der Schmelzwanne dar. Mit anderen Worten existieren in der erfindungsgemäßen Schmelzwanne im Läuterabschnitt und im Einschmelzabschnitt keine Wände oder sonstige Erhebungen, über denen die Badtiefe geringer ist als über der Schwelle im Bereich des Übergangs zwischen Einschmelzabschnitt und Läuterabschnitt. Bei der Ermittlung der Badtiefe über der Schwelle werden die dort angeordneten Elektroden nicht berücksichtigt. Dies gilt auch für den Einschmelzabschnitt und den Läuterabschnitt.

Hierbei ist von Vorteil, wenn die dritte Badtiefe B5 über der Schwelle (d.h. in dem Bereich zwischen erster und zweiter Stufe) zwischen 200 mm und 1000 mm beträgt. Die Schwelle hat in einem Ausführungsbeispiel eine Länge L4 in Fließrichtung der Glasschmelze (d.h. die Länge wird in Fließrichtung zwischen der ersten und der zweiten Stufe gemessen), die zwischen 700 mm und 3000 mm, beispielsweise 2150 mm beträgt.

Nach der vorliegenden Erfindung bedeutet der Ausdruck "im Übergangsbereich zwischen Einschmelzabschnitt und Läuterabschnitt", dass die Schwelle den Einschmelzabschnitt vom Läuterabschnitt trennt

An dieser Stelle soll darauf hingewiesen werden, dass beispielsweise aus der Druckschrift US 5,766,296 eine ausschließlich fossil beheizte Schmelzwanne bekannt ist, bei der eine im ein Schmelzbereich angeordnete Barriere dazu dient, zwei Strömungswalzen in der Glasschmelze voneinander zu trennen. Hierfür entspricht die Höhe die Barriere einem großen Teil der gesamten Badtiefe der Glasschmelze. Zudem sind die Elektroden zusammen mit Bubblern vor bzw. hinter der Barriere angeordnet, wobei die Badtiefe hinter der Barriere der Badtiefe vor der Barriere entspricht. Verglichen mit der vorliegenden Erfindung erfüllt die aus der Druckschrift US 5,766,296 bekannte Barriere einen ganz anderen Zweck als die in der vorliegenden Erfindung vorgesehene Stufe und weist durch die Anordnung der Elektroden auch einen anderen Aufbau auf.

In Bezug auf die vorliegende Erfindung ist die Badtiefe der senkrechte Abstand zwischen Boden der Schmelzwanne oder dem Boden eines anderen Teils der Glasschmelzanlage und der Oberfläche der Glasschmelze. Entsprechend ist die Badtiefe B1 das Minimum des Abstands des Bodens der Schmelzwanne von der Oberfläche der Glasschmelze im Einschmelzabschnitt und die Badtiefe B2 das Minimum des Abstands des Bodens der Schmelzwanne von der Oberfläche der Glasschmelze im Läuterabschnitt. Sowohl im Einschmelzabschnitt als auch im Läuterabschnitt können weitere Stufen und Schwellen vorgesehen sein, die jedoch die Badtiefe nicht so weit reduzieren wie die in deren Übergangsbereich angeordnete Schwelle mit der Vielzahl von Elektroden.

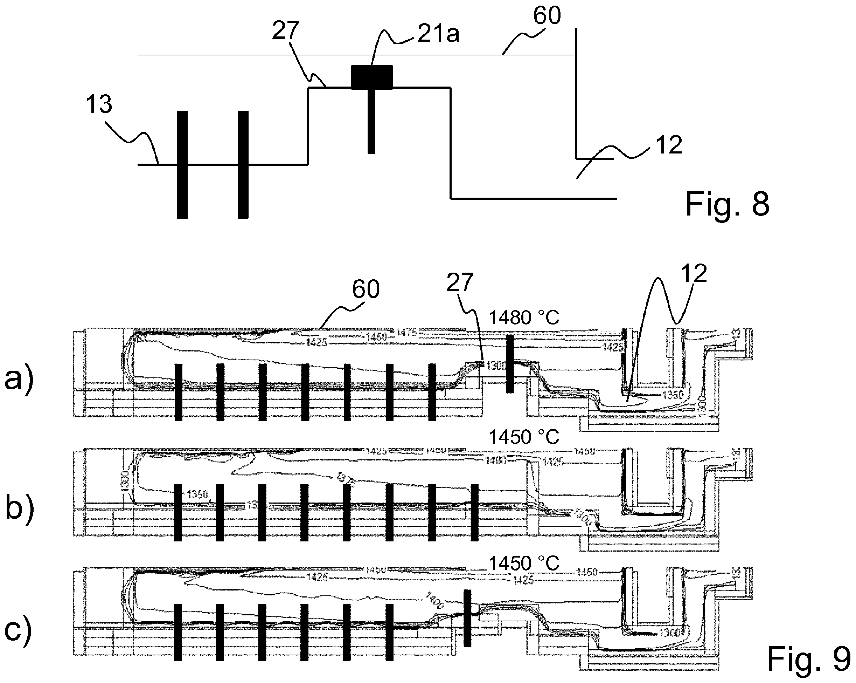

Die Erfindung bewirkt - für den Fall dass eine fossile Beheizung deutlich eingeschränkt ist (der durch Verbrennung von fossilem Brennstoff erzeugte Wärmeenergieanteil beträgt höchstens 70 %, vorzugsweise weniger als 40%, der gesamten zugeführten Wärmeenergie) - aufgrund der Beheizung des höchsten Abschnitts des Bodens der gesamten Schmelzwanne das effektive Aufsteigen von Blasen, die bei der Zersetzung der Karbonate beim Einschmelzen der Rohstoffe entstehen und zunächst einen kleinen Durchmesser aufweisen. Diese Blasen bewegen sich mit der Strömung durch die Schmelzwanne, vergrößern sich und steigen auf, wie dies oben beschrieben ist. Simulationsberechnungen ergeben, dass die Blasen nur bei einer Beheizung der höchsten Barriere (d.h. der Schwelle) der Schmelzwanne zwischen Einschmelz- und Läuterabschnitt derart wachsen und aufsteigen, dass das Glas nach der Barriere blasenfrei ist. Durch die Beheizung der Schwelle wird die Glasoberflächentemperatur im Bereich der Schwelle signifikant erhöht (siehe Fig. 9a) im Gegensatz zu Fig. 9b) und c)). Ist die höchste Barriere der Schmelzwanne kalt, d.h. ohne Beheizung, sinken die Blasen nach einer solchen Barriere wieder ab und gelangen nicht zur Oberfläche, da die fossile Beheizung nicht ausreicht, um die für das Aufsteigen der Blasen erforderliche hohe Badoberflächentemperatur zu schaffen.

In einer Weiterbildung der Erfindung ist in einem Abstand L2 in Fließrichtung hinter der ersten Elektrodenreihe im Boden der Schmelzwanne eine quer zur Fließrichtung verlaufende zweite Elektrodenreihe umfassend eine Vielzahl von Elektroden angeordnet, wobei der Abstand L2 (in Fließrichtung der Glasschmelze) der Elektrodenreihen in einem Ausführungsbeispiel zwischen 500 mm und 1000 mm beträgt, wobei die zweite Elektrodenreihe ebenfalls auf der Schwelle angeordnet ist. Durch die auf der ersten Schwelle hinter der ersten Elektrodenreihe angeordnete zweite Elektrodenreihe wird die Glasschmelze zusätzlich beheizt, um die Ausdehnung der Blasen und damit deren Aufsteigen an die Oberfläche der Glasschmelze weiter zu begünstigen. Eine weitere Verbesserung der Glasqualität wird erreicht, wenn in Fließrichtung vor der Schwelle im Boden der Schmelzwanne eine weitere Elektrodenreihe angeordnet wird, die parallel zu der mindestens einen ersten Elektrodenreihe verläuft und eine Vielzahl von nebeneinander angeordneten Elektroden umfasst, die aus dem Boden der Schmelzwanne in die Schmelze hineinragen. Die weitere Elektrodenreihe befindet sich in einem Abstand von beispielsweise 500 mm bis 1500 mm vor der Oberkante der ersten Stufe der Schwelle, d.h. noch im Einschmelzabschnitt.

Die Badtiefe B2 im Läuterabschnitt, d.h. in Fließrichtung des Glases nach der Stufe, ist kleiner als oder größer als oder gleich der Badtiefe B1 im Einschmelzabschnitt. In einem Ausführungsbeispiel einer erfindungsgemäßen Schmelzwanne beträgt die Badtiefe B1 im Einschmelzabschnitt zwischen 1100 mm, vorzugsweise zwischen 1400 mm, und 2000 mm und die Badtiefe B2 im Läuterabschnitt zwischen 700 mm und 2800 mm, vorzugsweise zwischen 700 mm und 2500 mm. In einem Ausführungsbeispiel kann die Badtiefe derart gestaltet sein, dass B2 < B1, um das Aufsteigen der Blasen zu begünstigen. Beispielsweise ist die Badtiefe B2 kleiner oder gleich 65 % der Badtiefe B1.

Erfindungsgemäß ist die auf der Schwelle angeordnete Vielzahl von Elektroden als Stabelektrode und/oder Blockelektrode ausgebildet. Der Vorteil der Blockelektroden besteht darin, dass diese nicht so weit aus dem Boden der Schmelzwanne herausragen. Eine Blockelektrode ragt etwa 100 mm in die Glasschmelze hinein und hat beispielsweise die Form eines Quaders, wobei die Grundfläche beispielsweise quadratisch ist. Eine Stabelektrode ragt weiter in die Glasschmelze hinein und weist einen Durchmesser von etwa 5 cm bis 8 cm auf

Es ist weiter von Vorteil, wenn der mindestens eine Brenner zur Zuführung des zweiten Wärmeenergieanteils ausschließlich im Einschmelzabschnitt angeordnet ist. In einem Ausführungsbeispiel ist eine Vielzahl von Brennern vorgesehen, die z.B. in einer in Fließrichtung verlaufenden Seitenwand angeordnet sind. Eine fossile Beheizung im Läuterabschnitt würde lediglich eine Erhöhung der aufgebrachten Wärmeenergie ohne signifikante Verbesserung der Glasqualität bedeuten. Erfindungsgemäß wird im Einschmelzabschnitt mittels mindestens eines Brenners fossiles Brenngas unter Verwendung eines Oxidanten in einem Verbrennungsraum der Schmelzwanne oberhalb der Oberfläche der Glasschmelze verbrannt, um den zweiten Wärmeenergieanteil zu erzeugen. Hierbei steht als Oxidant beispielsweise ein sauerstoffreiches Gasgemisch mit einem Sauerstoffanteil von mehr als 90 Vol-% zur Verfügung. In diesem Fall kann auf zusätzliche Vorwärmaggregate, wie sie bei der Verwendung von Luft als Oxidanten notwendig sind, verzichtet werden. Zudem wird aufgrund des reduzierten Stickstoffanteils die Bildung von Stickoxiden verringert. Im Rahmen der vorliegenden Neuerung wird davon ausgegangen, dass der gegebenenfalls erforderliche Energieaufwand für eine Vorwärmung des Oxidanten in dem zweiten Wärmeenergieanteil enthalten ist.

In einem Ausführungsbeispiel der Erfindung ist der mindestens eine Brenner derart steuerbar, d.h. dessen Zufuhr an Brennstoff, z.B. Brenngas, dass der von dem mindestens einen Brenner erzeugte zweite Wärmeenergieanteil dem Verlust an Wärmeenergie entspricht, der über die Wände der Schmelzwanne, d.h. den Boden, die Überdachung sowie die Seitenwände nach außen abgegeben wird.

In einer Schmelzwanne wird Energie für die Wärmeerzeugung in dem ersten Wärmeenergieanteil (Q_{elec}) über Elektroden als elektrische Energie und in dem zweiten Wärmeenergieanteil (Q_{fossil}) über Brenner durch Verbrennung fossiler Energieträger (Brenngas) eingebracht. Die gesamte zugeführte Wärmeenergie, die sich aus dem ersten Wärmeenergieanteil und dem zweiten Wärmeenergieanteil zusammensetzt, wird in die Energie (Q_{chem}) für die chemische/physikalische Umsetzung des mindestens einen Ausgangsstoffs von fest zu flüssig, den Wärmeinhalt des Abgases (Q_{abgas}), den Wärmeinhalt des geschmolzenen Glases (Q_{glas}), das die Schmelzwanne aus der Ausgangsöffnung verlässt, und die Wärmeverluste (Q_{wand}) über die Wände der Schmelzwanne umgesetzt. Dies bedeutet, dass für die Wärmeverluste über die Wände der Schmelzwanne Folgendes gilt: ${Q}_{wand} = {Q}_{elec} + {Q}_{fossil} - {Q}_{chem} - {Q}_{glas} - {Q}_{abgas}$

Die Messung von Temperaturen und Volumenströmen oder Massenströmen in der Schmelzwanne sowie die Berechnung von spezifischen Eigenschaften erlauben es erfindungsgemäß, die Energie Q_{wand} zu ermitteln, die als Verlustwärme über die äußeren Flächen der Schmelzwanne abgegeben wird. Insbesondere kann die Bestimmung der Energieanteile wie folgendermaßen erfolgen:
- Q_{fossil} aus dem Energieeintrag des fossilen Brennstoffs mit den messbaren Parametern Heizwert des Brennstoffs, Massenstrom und Temperatur,
- Q_{glas} aus dem Energieinhalt des Glases, das die Schmelzwanne verlässt mit dem Parameter spezifische Wärme des Glases, und den messbaren Parametern Temperatur und Massenstrom des die Schmelzwanne verlassenden Glasstroms,
- Q_{chem} aus dem Energiebedarf des Glases beziehungsweise des mindestens einen Ausgangsstoffs für die chemische/physikalische Umsetzung von fest zu flüssig, wobei der Energiebedarf zusammensetzungsspezifisch aus Literaturangaben bestimmt werden kann,
- Q_{abgas} aus dem Wärmeinhalt des die Schmelzwanne verlassenden Abgases (der Verbrennung und aus in der Glasschmelze auftretenden chemischen Umsetzungen) mit dem Parameter spezifische Wärme und den messbaren Parametern Massenstrom und Temperatur des die Schmelzwanne verlassenden Abgases sowie
- Q_{elec} aus der den Elektroden zugeführten messbaren elektrischen Leistung.

Für die Bestimmung der spezifischen Wärme kann beispielsweise das Buch Horst Scholze, "Glas", 1977, Seite 283 herangezogen werden. Der Wärmebedarf für das Schmelzen von Glas enthält das Buch Wolfang Trier, Glasschmelzöfen-Konstruktion und Betriebsverhalten, 1984, Seite 84 herangezogen werden. Aus diesem Buch ergibt sich zum Beispiel, dass Kalk-Natron-Glas (Behälterglas) einen Wärmebedarf zum Schmelzen von 2671 kJ/kg hat. Aus dem Buch Joachim Wünning, "Handbuch Brennertechnik für Industrieöfen", 2007, Seite 191 können die Werte für die spezifische Wärme des Brenngases und des Abgases entnommen werden.

Anhand der so bestimmten Wärmeenergiemengen kann der Betrag an mittels des mindestens einen Brenners zugeführter Wärmeenergie Q_{fossil} (d.h. zum Beispiel durch dessen Zufuhr an fossilem Brennstoff) geregelt oder gesteuert werden.

Um der Glasschmelze elektrische Energie im Bereich des Einschmelzabschnitts zuzuführen, hat sich gezeigt, dass es von Vorteil ist, in dem Einschmelzabschnitt im Boden der Schmelzwanne eine Vielzahl von Elektroden anzuordnen, erfindungsgemäß in mindestens einer, in Fließrichtung verlaufenden dritten Elektrodenreihe. In einem weiteren Ausführungsbeispiel können eine dritte Elektrodenreihe und eine vierte Elektrodenreihe, die parallel zur dritten Elektrodenreihe verläuft, vorgesehen sein.

In einer Weiterbildung der Erfindung ist in dem Einschmelzabschnitt und/oder in dem Übergangsbereich zwischen dem Einschmelzabschnitt und dem Läuterabschnitt an der Überdachung eine Strahlungswand angeordnet, die quer zur Fließrichtung verläuft, vorzugsweise in einem scheitrechten (waagerechten) Bogen, beispielsweise mit einer Höhe H1 des Scheitels des Bogens über der Oberfläche der Glasschmelze von mindestens 900 mm. Die Strahlungswand ragt von der unteren Oberfläche der Überdachung senkrecht nach unten in Richtung der oberen Oberfläche der Glasschmelze. Die Strahlungswand sorgt dafür, dass die Energie, die durch den fossilen Brennstoff freigesetzt wird, auch weitgehend nur in dem Einschmelzabschnitt zur Verfügung steht. Im Läuterabschnitt wird ausreichend Energie durch die zugeführte elektrische Energie bereitgestellt. Der Abstand der Strahlungswand von der Rückwand der Schmelzwanne beträgt vorzugsweise höchstens 35 % der Gesamtlänge der Schmelzwanne (in Fließrichtung des Glases) von der Eingangsöffnung zur Ausgangsöffnung. In dem Fall, dass die Strahlungswand im Einschmelzabschnitt angeordnet ist, kann der (mindestens eine) Brenner zur Erzeugung des zweiten Wärmeenergieanteils auch in Fließrichtung der Glasschmelze hinter der Strahlungswand angeordnet sein.

Die obige Aufgabenstellung wird ferner gelöst durch eine Glasschmelzanlage mit einer Schmelzwanne mit den vorstehend erläuterten Merkmalen, einem sich an die Schmelzwanne anschließenden Einschnürungsbereich, einem Konditionierbereich und einen Kanal.

In dem Einschnürungsbereich verringert sich im Anschluss an die Schmelzwanne die Beckenbreite. Dies hat den Vorteil, dass die Fließgeschwindigkeit der Glasschmelze verringert wird.

In einem Ausführungsbeispiel ist in dem Einschnürungsbereich an der Überdeckung des Einschnürungsbereichs mindestens ein Kühlelement angeordnet. Dieses mindestens eine Kühlelement ragt senkrecht von der Überdeckung in die Glasschmelze hinein, hat beispielsweise die Form einer Platte und ist z.B. mittels Wasser gekühlt. Das mindestens eine Kühlelement dient ebenfalls zur Reduktion der Fließgeschwindigkeit der Glasschmelze.

In einem Ausführungsbeispiel der erfindungsgemäßen Glasschmelzanlage ist die Badtiefe B3 des Konditionierbereichs kleiner oder gleich der Badtiefe B2 des Läuterabschnitts. Weiter kann die Badtiefe B4 des Kanals kleiner oder gleich der Badtiefe B3 des Konditionierbereichs sein. Bei einer Verringerung der Badtiefe von Bereich zu Bereich ist zwischen den Bereichen jeweils eine Stufe angeordnet. Hierbei kann die Badtiefe B3 des Konditionierbereichs und/oder die Badtiefe B4 des Kanals kleiner als die dritte Badtiefe über der Schwelle sein.

Die obige Aufgabe wird ferner durch ein Verfahren zur Herstellung einer Glasschmelze in einer oben dargestellten Schmelzwanne gelöst. Die Glasschmelze wird erfindungsgemäß aus mindestens einem festen Ausgangsstoff hergestellt, wobei der mindestens eine feste Ausgangsstoff der Eingangsöffnung beispielsweise kontinuierlich mittels einer zu Zuführvorrichtung (Einleger) zugeführt wird, und das geschmolzene Glas aus der Ausgangsöffnung abfließt, wobei die Glasschmelze während des Schmelzprozesses in eine Fließrichtung von der Eingangsöffnung zur Ausgangsöffnung fließt. In der Schmelzwanne passiert das Glas und/oder der mindestens eine Ausgangsstoff in Fließrichtung zuerst den Einschmelzabschnitt und danach den Läuterabschnitt sowie zwischen dem Einschmelzabschnitt und dem Läuterabschnitt die quer zur Fließrichtung verlaufende Schwelle im Boden der Glasschmelzwanne, wobei die dritte Badtiefe B5 über der Schwelle kleiner als die erste (minimale) Badtiefe B1 und kleiner als die zweite (minimale) Badtiefe B2 ist, wobei die Schwelle die höchste Erhebung im Boden der Schmelzwanne mit der geringsten Badtiefe darstellt. Zum Aufschmelzen des mindestens einen Ausgangsstoffs wird der Glasschmelze
- der elektrisch erzeugte, erster Wärmeenergieanteil mittels der Vielzahl in dem Boden und/oder in den Seitenwänden der Schmelzwanne angeordneten und in die Glasschmelze hinein ragenden Elektroden und
- der mittels Verbrennung von fossilem Brennstoff erzeugte zweite Wärmeenergieanteil mittels dem mindestens einen in einer Seitenwand und/oder
der Überdachung oberhalb der Glasschmelze angeordneten Brenner zugeführt, wobei die gesamte zugeführte Wärmeenergie sich aus dem ersten Wärmeenergieanteil und dem zweiten Wärmeenergieanteil zusammensetzt,
wobei der erste Wärmeenergieanteil mindestens 30 %, vorzugsweise mehr als 60 %, und höchstens 98% der gesamten zugeführten Wärmeenergie beträgt,
wobei mindestens ein Teil des ersten Wärmeenergieanteils mittels einer auf der Schwelle im Boden der Schmelzwanne, quer zur Fließrichtung verlaufende erste Elektrodenreihe umfassend eine Vielzahl von Elektroden erzeugt wird. Das erfindungsgemäße Verfahren begünstigt das Aufsteigen von Blasen in der Glasschmelze und eine Kosteneffizienz bei der Herstellung der Glasschmelze.

In einem Ausführungsbeispiel des erfindungsgemäßen Verfahrens wird der mindestens eine Brenner derart geregelt oder gesteuert (z.B. dessen Zufuhr an Brennstoff), dass der von dem mindestens einen Brenner erzeugte zweite Wärmeenergieanteil dem Verlust an Wärmeenergie entspricht, der über die Schmelzwanne nach außen abgegeben wird. Dieses Vorgehen wurde oben bereits ausführlich erläutert. Insbesondere wurden oben die möglichen Ausführungsformen für den ersten Wärmeenergieanteil und den zweiten Wärmeenergieanteil erläutert, die auch für das erfindungsgemäße Verfahren gelten.

Weitere Merkmale, Vorteile und Anwendungsmöglichkeiten der Erfindung ergeben sich auch aus der nachfolgenden Beschreibung von Ausführungsbeispielen, die in den Figuren dargestellt sind.

Es zeigen schematisch
Fig. 1 ein erstes Ausführungsbeispiel einer erfindungsgemäßen Glasschmelzanlage mit einer erfindungsgemäßen Schmelzwanne in einem vertikalen Längsschnitt (a)) und einem horizontalen Querschnitt (b)),
Fig. 2 ein zweites Ausführungsbeispiel einer erfindungsgemäßen Glasschmelzanlage mit einer erfindungsgemäßen Schmelzwanne in einem Längsschnitt (a)) und einem horizontalen Querschnitt (b)),
Fig. 3 das Ausführungsbeispiel gemäß Fig. 2 in einem vertikalen Querschnitt entlang der Linie A-A (siehe Fig. 2a)),
Fig. 4 einen Ausschnitt aus Fig. 2 a) mit Bemaßungen,
Fig. 5 in einem Diagramm die Abhängigkeit der Länge des Einschmelzabschnitts (y-Achse, in Metern) vom geplanten Durchsatz der Glasschmelzanlage (in Tonnen/Tag) durch die obere durchgezogene Linie, die Abhängigkeit der Länge des Läuterabschnitts (in Metern) vom geplanten Durchsatz der Glasschmelzanlage (x-Achse, in Tonnen/Tag) durch die mittlere gestrichelte Linie und die Abhängigkeit der Breite der Schmelzwanne im Einschmelzabschnitt und im Läuterabschnitt (in Metern) vom geplanten Durchsatz (in Tonnen/Tag) durch die untere gepunktete Linie,
Fig. 6 ein drittes Ausführungsbeispiel einer erfindungsgemäßen Glasschmelzanlage mit einer erfindungsgemäßen Schmelzwanne in einem Längsschnitt,
Fig. 7 die erfindungsgemäße Ausführungsform c) im direkten Vergleich mit herkömmlichen Varianten der Anordnung der Elektroden (a) - Dokument Müller - und b) - Dokument Pieper -) in Bezug auf die Stufe,
Fig. 8 einen Abschnitt einer erfindungsgemäßen Schmelzwanne eines vierten Ausführungsbeispiels einer erfindungsgemäßen Glasschmelzanlage,
Fig. 9 einen Vergleich der Temperatur an der Oberfläche des Glases über der Stufe für die erfindungsgemäße Ausführungsform a) mit herkömmlichen Varianten der Anordnung der Elektroden (b) und c)) in einer Darstellung aus der Simulation in einem vertikalen Längsschnitt und
Fig. 10 und 11 eine Modellrechnung mit der Aufgabe von Blasen im Einlegebereich, wobei die Blasen in Fig. 10 auf der rechten Einlegeseite und in Fig. 11 auf der linken Einlegeseite einer Schmelzwanne aufgegeben wurden, jeweils in einem horizontalen Querschnitt (a) und in einem vertikalen Längsschnitt (b) durch die Schmelzwanne.

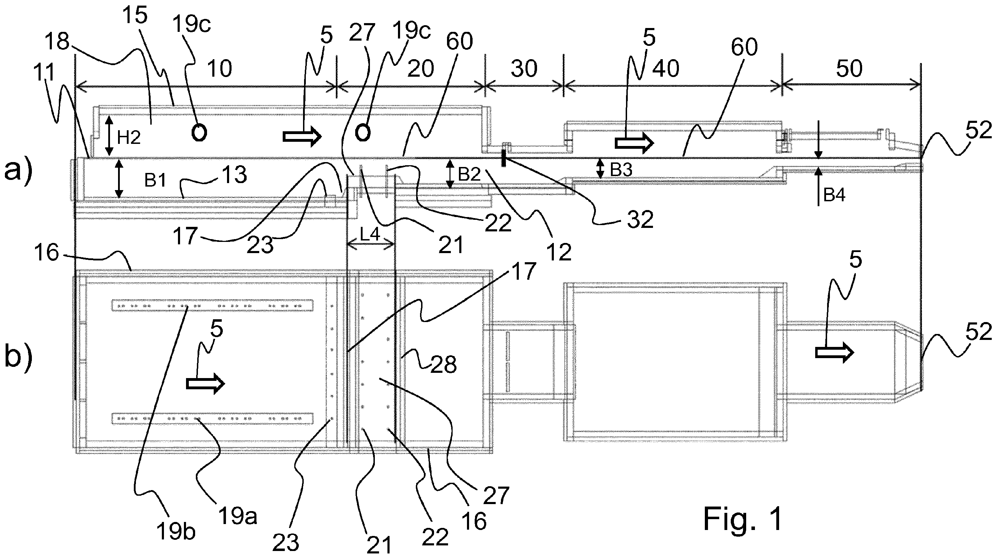

Fig. 1 zeigt ein erstes Ausführungsbeispiel einer erfindungsgemäßen Glasschmelzanlage mit einer erfindungsgemäßen Schmelzwanne, die beispielsweise für eine Tagesleistung von 400 t geschmolzenes Glas geeignet ist.

Die Schmelzwanne umfasst die Abschnitte Einschmelzabschnitt 10 und Läuterabschnitt 20. An die Schmelzwanne schließt sich ein Einschnürungsbereich 30, ein Konditionierbereich 40 und ein Kanal 50 an. Die Ausgangsstoffe für die Herstellung der Glasschmelze (primäre Rohstoffe und gegebenenfalls Scherben) werden an der Eingangsöffnung 11 der Schmelzwanne mittels einer nicht dargestellten Beschickungsvorrichtung kontinuierlich zugeführt. Die Ausgangsstoffe werden insbesondere in dem Einschmelzabschnitt 10 der Schmelzwanne aufgeschmolzen und bewegen sich (fließen) zusammen mit der Glasschmelze 60 durch den Läuterabschnitt 20 zur Ausgangsöffnung 12 der Schmelzwanne und weiter durch den Einschnürungsbereich 30, den Konditionierbereich 40 und den Kanal 50 bis zur Glasaustrittsöffnung 52. Die Fließrichtung der Glasschmelze 60 ist in Fig. 1a) und 1b) durch einen Pfeil 5 gekennzeichnet.

Die Schmelzwanne besitzt einen Boden 13, eine Überdachung 15, die dem Boden 13 gegenüberliegt, sowie Seitenwände 16. In dem in Fig. 1 gezeigten Ausführungsbeispiel verlaufen die seitlichen Seitenwände 16 parallel zur Fließrichtung der Glasschmelze 60. Als Seitenwände werden im Rahmen der vorliegenden Neuerung (d.h. für alle möglichen Ausführungsbeispiele) auch die Wände im Bereich der Eingangsöffnung 11 und der Ausgangsöffnung 12 angesehen, welche quer zur Fließrichtung verlaufen.

Der Boden 13 der Schmelzwanne weist eine ansteigende Stufe 17 und eine abfallende Stufe 28 auf, welche quer zur Fließrichtung der Glasschmelze, insbesondere senkrecht zur Fließrichtung, verlaufen und im Übergangsbereich zwischen Einschmelzabschnitt 10 und Läuterabschnitt 20 liegen. Die beiden Stufen 17, 28 bilden zusammen eine Schwelle 27 aus. Die Stufe 17 stellt gewissermaßen der Beginn des Läuterabschnitts 20 dar. Die Badtiefe B1 im Einschmelzabschnitt 10, welche dem Minimum aller Badtiefen im Einschmelzabschnitt 10 entspricht, ist größer als die Badtiefe B2 in Fließrichtung hinter der abfallenden Stufe 28, d.h. im Läuterabschnitt 20.Die Badtiefe B2 ist das Minimum aller Badtiefen im Läuterabschnitt 20, wobei bei der Ermittlung der Minima im Läuterabschnitt und im Einschmelzabschnitt die Badtiefe über der Schwelle 27 und die dort ggf. angeordneten Elektroden nicht berücksichtigt werden.

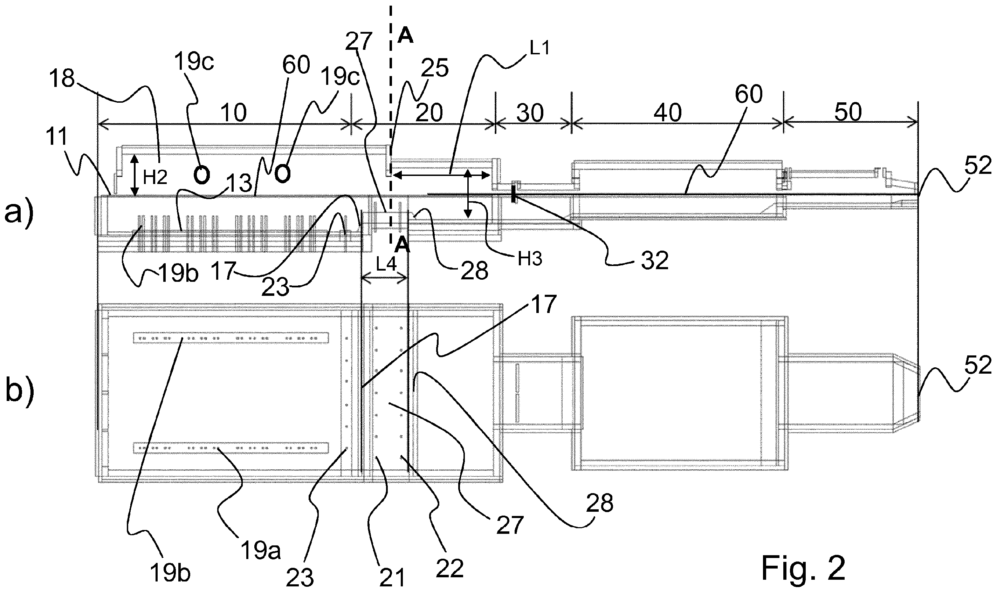

In Fließrichtung der Glasschmelze hinter der ersten Stufe 17, d.h. auf der Schwelle 27 im Übergangsbereich zwischen Einschmelzabschnitt 10 und Läuterabschnitt 20, sind eine erste Elektrodenreihe 21 mit einer Vielzahl von neben einander angeordneten Elektroden und eine zweite Elektrodenreihe 22 ebenfalls mit einer Vielzahl von neben einander angeordneten Elektroden vorgesehen. Die als Stabelektroden ausgeführten Elektroden erstrecken sich jeweils ausgehend vom Boden 13 der Schmelzwanne senkrecht nach oben in die Glasschmelze 60. Alternativ können die Elektroden der Elektrodenreihen 21, 22 zumindest teilweise als Blockelektroden ausgeführt sein, wobei eine Blockelektrode im Schnitt in Fig. 8 dargestellt ist. Die Blockelektrodenreihe ist mit dem Bezugszeichen 21a versehen. Jede Elektrodenreihe 21, 22 verläuft quer zur Fließrichtung. Da die Elektroden der ersten Elektrodenreihe 21 und der zweiten Elektrodenreihe 22 in Fließrichtung hinter der ersten Stufe 17 angeordnet sind, befinden sie sich in dem Bereich des Bodens 13, nämlich im Bereich der Schwelle 27, der verglichen mit dem Einschmelzabschnitt 10, die kleinere Badtiefe B5 aufweist. Die (minimale) Badtiefe B1 des Einschmelzabschnitts 10 beträgt zwischen 1100 mm, vorzugsweise zwischen 1400 mm, und 2000 mm, zum Beispiel 1700 mm. Die (minimale) Badtiefe B2 des Läuterabschnitts 20 beträgt zwischen 700 mm und 1400 mm, beispielsweise 1100 mm. Die in der ersten Elektrodenreihe 21 und in der zweiten Elektrodenreihe 22 hintereinander liegenden Elektroden können in Fließrichtung hintereinander (wie in Fig. 1 und 2) oder versetzt zueinander angeordnet sein.

Für die Beheizung der Glasschmelze 60 mittels elektrischer Energie sind im Einschmelzabschnitt 10 eine dritte Elektrodenreihe 19a und eine vierte Elektrodenreihe 19b vorgesehen, welche jeweils ebenfalls eine Vielzahl von neben einander angeordneten Elektroden (z. B. Stabelektroden) besitzen, die aus dem Boden 13 heraus in die Glasschmelze 16 ragen. Die dritte Elektrodenreihe 19a und die vierte Elektrodenreihe 19b verlaufen jeweils in Richtung der Fließrichtung (Pfeil 5) der Glasschmelze 60. Entsprechend ist die Ausrichtung der dritten und vierten Elektrodenreihe 19a und 19b senkrecht zur Anordnung der ersten und zweiten Elektrodenreihe 21, 22. Im Einschmelzabschnitt 10 können auch mehr als zwei, in Fließrichtung der Glasschmelze verlaufende Elektrodenreihen vorgesehen sein.

In Fließrichtung der Glasschmelze vor der Stufe 17 kann eine weitere Elektrodenreihe 23 angeordnet sein, die eine Vielzahl von quer zur Fließrichtung nebeneinander angeordneten Elektroden (z.B. Stabelektroden) aufweist, die vom Boden 13 der Schmelzwanne nach oben in die Schmelze 60 hineinragen. Demnach verläuft die weitere Elektrodenreihe 23 parallel zur ersten Elektrodenreihe 21 und zur zweiten Elektrodenreihe 22. Die weitere Elektrodenreihe 23 befindet sich in einem Abstand von beispielsweise 500 mm bis 1500 mm, z.B. 800 mm, vor der Oberkante der ersten Stufe, d.h. noch im Einschmelzabschnitt. Die Elektroden der weiteren Elektrodenreihe 23 sind versetzt zu den Elektroden der auf der Schwelle 27 vorgesehenen Elektrodenreihen 21, 22 angeordnet.

Ferner sind jeweils in den beiden Seitenwänden 16, die parallel zur Fließrichtung der Glasschmelze 60 verlaufen, beispielsweise zwei Brenner 19c angeordnet, welche der Glasschmelze 60 Wärmeenergie zu führen, die durch Verbrennung aus dem fossilen Brennstoff Gas mittels eines Oxidanten im Verbrennungsraum 18 erzeugt wird. Die Öffnungen der Brenner 19c sind in den Seitenwänden 16 oberhalb der Oberfläche der Glasschmelze 60 angeordnet, sodass sie diese über den Verbrennungsraum 18 von oben beheizen. Ein Brenner 19c befindet sich oberhalb der Schwelle 27.

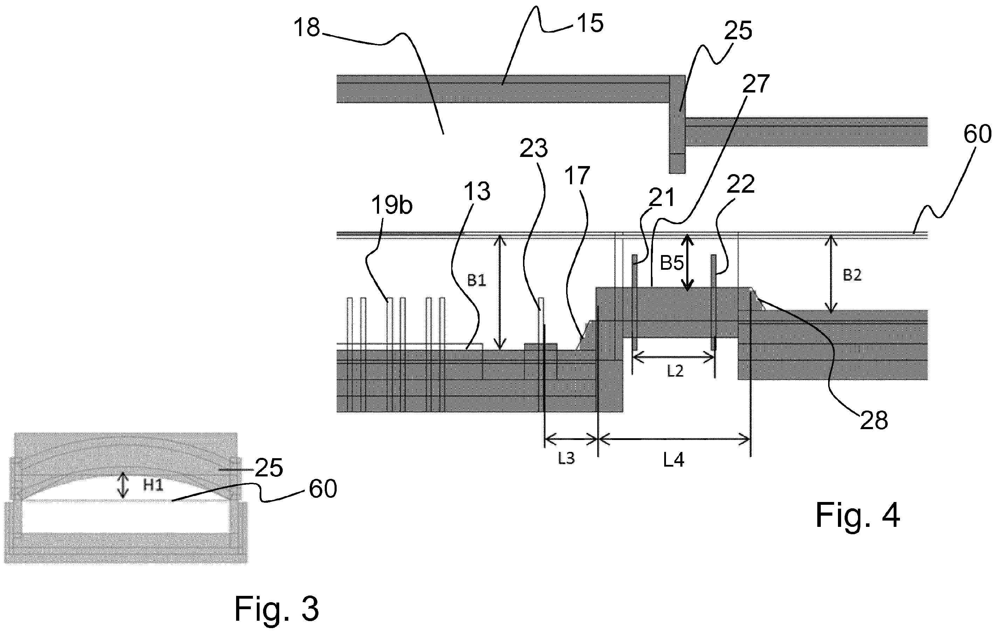

Ferner kann in dem Läuterabschnitt 20 oberhalb der ersten Elektrodenreihe 21 oder der zweiten Elektrodenreihe 22 oder zwischen diesen Elektrodenreihen 21, 22, wie in den Fig. 2 bis 4 gezeigt, eine Strahlungswand 25 angeordnet sein, die von der Überdachung 15 nach unten in Richtung Glasschmelze 60 verläuft. Vorzugsweise schließt die Strahlungswand 25 über der Glasschmelze als scheitrechter (waagerechter) Bogen ab. Ein solcher Bogen ist in Fig. 3 dargestellt. Der Scheitel des Bogens weist eine Höhe H1 von der Oberfläche der Glasschmelze 60 auf, die mindestens 900 mm beträgt. Wie in Fig. 3 gezeigt ist, weist die Strahlungswand 25 einen Abstand L1 von der Ausgangsöffnung 12 der Schmelzwanne auf (siehe Fig. 2), der höchstens 35 % der Gesamtlänge der Schmelzwanne zwischen Eingangsöffnung 11 und Ausgangsöffnung 12 beträgt. Die Länge L1 von der Strahlungswand 25 zur Ausgangsöffnung 12 der Schmelzwanne beträgt beispielsweise 1500 mm bis 3000 mm, zum Beispiel 2150 mm.

Im Einschnürungsbereich 30 ist ferner ein Kühlelement 32 angeordnet, das von der Überdeckung 15 des Einschnürungsbereichs 30 nach unten abragt und in die Glasschmelze 60 eintaucht. Das Kühlelement 32 wird beispielsweise mittels Wasser gekühlt und besitzt die Form einer Platte.

In dem Konditionierbereich 40 und dem Kanal 50 können die Badtiefen B3 und B4, wie in Fig. 1 dargestellt, weiter verringert werden.

Fig. 2 zeigt ein weiteres Ausführungsbeispiel einer erfindungsgemäßen Glasschmelzanlage mit einer erfindungsgemäßen Schmelzwanne, die sich von dem in Fig. 1 dargestellten Ausführungsbeispiel auch dadurch unterscheidet, dass die Überdachung 15 in dem Bereich hinter der Strahlungswand 25 abgesenkt ist. Die Überdachung weist in dem abgesenkten Bereich eine Höhe H3 über der Oberfläche der Glasschmelze 60 auf, die beispielsweise 50 % bis 80 % der Höhe H2 beträgt. Die Gewölbehöhe H3 kann im Läuterabschnitt 20 hinter der Strahlungswand 25 beispielsweise 65 % der Höhe H2, im Einschmelzabschnitt 10 bzw. im Läuterabschnitt 20 vor der Strahlungswand 25 betragen. Hierbei ist die Höhe H2 der Abstand der unteren Oberfläche der Überdachung 15 von der Oberfläche der Glasschmelze 60 im Einschmelzabschnitt 10. Die Länge L1 des abgesenkten Bereichs von der Strahlungswand 25 zur Ausgangsöffnung 12 der Schmelzwanne beträgt beispielsweise 1500 mm bis 3000 mm, zum Beispiel 2150 mm.

In den in den Figuren 1 bis 4 und 6 dargestellten Ausführungsbeispielen einer Schmelzwanne bzw. einer Glasschmelzanlage bildet der Boden 13 der Schmelzwanne im Läuterabschnitt 20 eine erste Schwelle 27, die an der ersten Stufe 17 beginnt und eine Länge L4 in Fließrichtung der Glasschmelze 60 besitzt (siehe Fig. 1, 2 und 4), wobei die Länge L4 zwischen 700 mm und 3000 mm beträgt. Im Bereich der ersten Schwelle 27 weist der Boden der Schmelzwanne eine Badtiefe B5 auf, die kleiner als die nach der ersten Schwelle 27 im Läuterabschnitt 20 vorliegende Badtiefe B2 ist. Die Badtiefe B5 beträgt beispielsweise zwischen 200 mm und 1000 mm, zum Beispiel 800 mm. Die erste Elektrodenreihe 21 und die zweite Elektrodenreihe 22 sind, wie Fig. 1, 2 und4 zeigen, im Bereich der Schwelle 27, d.h. auf der Schwelle 27, angeordnet. Am Ende der Schwelle 27 in Fließrichtung der Glasschmelze weist die Schwelle eine zweite Stufe 28 auf, durch die sich die Badtiefe im Läuterabschnitt 20 wieder auf den Wert B2 vergrößert. Wie oben erläutert wurde, bewirkt die Schwelle 27 und die auf ihr angeordneten Elektroden das Aufsteigen von in der Glasschmelze vorliegenden Blasen und somit eine Verbesserung der Glasqualität. Die elektrisch beheizte Schwelle 27 bildet in der Schmelzwanne zwischen Eingangsöffnung 11 und Ausgangsöffnung 12 die höchste Barriere.

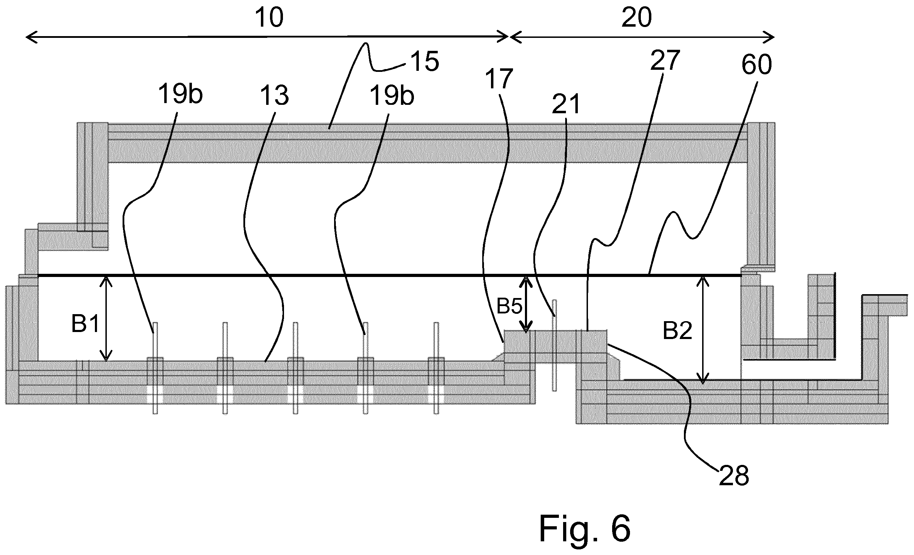

Fig. 6 zeigt die Schmelzwanne eines fünften Ausführungsbeispiels einer Glasschmelzanlage für die Herstellung von Behälterglas. Dieses Ausführungsbeispiel entspricht weitestgehend dem in den Fig. 2 bis 4 dargestellten Ausführungsbeispiel, sodass auf dieses Ausführungsbeispiel Bezug genommen wird, wobei die anhand der Fig. 1 bis 4 diskutierten Ausführungsbeispiele eher für die Herstellung von Flachglas geeignet sind.

Bei der in Fig. 6 dargestellten Schmelzwanne ist die Badtiefe B2 des Läuterabschnitts hinter der Schwelle 27 größer als die Badtiefe B1 des Einschmelzabschnitts und die Badtiefe B5 über der Schwelle 27 kleiner als die Badtiefe B1 des Einschmelzabschnitts. Zudem weist die Schwelle 27 lediglich eine einzige Reihe 21 nebeneinander angeordneter Elektroden auf, während in den Ausführungsbeispielen gemäß Fig. 1 bis 4 jeweils mindestens zwei Elektrodenreihen auf der Schwelle vorgesehen sind. In diesem Ausführungsbeispiel beträgt die Badtiefe B1 beispielsweise zwischen 1100 mm und 2000 mm, zum Beispiel 1400 mm. Die Badtiefe B2 beträgt zwischen 1200 mm und 2200 mm, beispielsweise 1800 mm. Die Badtiefe B5 über der Schwelle 27 beträgt beispielsweise zwischen 200 mm und 1000 mm. Darüber hinaus ist keine Strahlungswand vorgesehen, die von der Überdachung 15 abragt.

Das Konzept der vorliegenden Erfindung wurde in umfangreichen Modellrechnungen überprüft und insbesondere für Durchsatzmengen von 300 t bis 800 t Glasschmelze pro Tag betrachtet. Bei hohen Durchsatzmengen müssen die Abmessungen im Einschmelzabschnitt 10 und im Läuterabschnitt 20 (d.h. Länge und Breite der Schmelzwanne) angepasst werden. Demgegenüber ändern sich die Badtiefen sowie die Breite der Schwelle 27 in Fließrichtung und Höhe der Schwelle 27 nicht. Selbstverständlich ist die Breite der Schwelle 27 quer zur Fließrichtung an die Breite der Schmelzwanne im Einschmelzabschnitt 10 und im Läuterabschnitt 20 angepasst. Entsprechend nimmt auch die Anzahl der Elektroden, die in den Elektrodenreihen 21, 22, 23 nebeneinander angeordnet sind, zu.

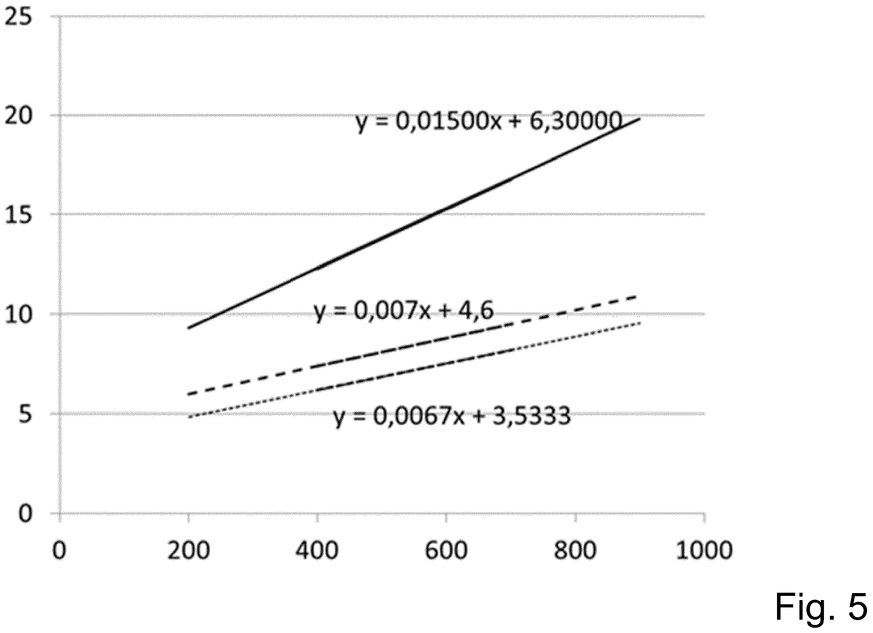

Fig. 5 veranschaulicht in der durchgezogenen Kurve den Zusammenhang zwischen der Länge des Einschmelzabschnitts 10 (in Metern) in Abhängigkeit vom Durchsatz (in Tonnen/Tag) der Schmelzwanne bzw. der Glasschmelzanlage, in der gestrichelten Kurve den Zusammenhang zwischen der Länge des Läuterabschnitts 20 (in Metern) in Abhängigkeit vom Durchsatz (Tonnen/Tag) und in der gepunkteten Kurve die Breite von Einschmelzabschnitt 10 und Läuterabschnitt 20 quer zur Fließrichtung (in Metern) in Abhängigkeit vom Durchsatz (Tonnen/Tag). Beispielsweise ist für einen Durchsatz von 400 t Glasschmelze pro Tag eine Länge des Einschmelzabschnitts 10 von etwa 12,5 m erforderlich, während für einen Durchsatz von 700 t Glasschmelze pro Tag eine Länge des Einschmelzabschnitts 10 von etwa 17 m benötigt wird.

Nach der Erfindung ist entscheidend, dass mit der Dimensionierung der Schwelle 27 einschließlich der auf der Schwelle angeordneten Elektroden gewährleistet ist, dass Blasen, die einen bestimmten, minimalen durch Messer aufweisen, auch an die Oberfläche gelangen. In der nachfolgenden Tabelle werden geeignete Geometrieverhältnisse für Blasen mit einer Größe > 0,2 mm dargestellt. Hierbei wurde der Blasenaufstieg nach dem Stoke'schen Gesetz berechnet. Aus der Tabelle ist ersichtlich, dass Blasen mit einem üblichen Durchmesser > 0,23 mm für alle drei gerechneten Durchsatzmengen genügend Zeit hatten, an die Oberfläche der Glasschmelze zu gelangen. Hierbei ist die Aufstiegszeit gleich der Verweilzeit der Glasschmelze im Läuterabschnitt 20, in der oberen Schicht der Glasschmelze.

| | | | | |
|---|---|---|---|---|
| Durchsatz | kg/Tag | 400.000 | 500.000 | 700.000 |
| Dichte der Schmelze | kg/m³ | 2400 | 2400 | 2400 |
| Temperatur Schmelzbad | °C | 1480 | 1480 | 1480 |
| Zähigkeit Schmelze | Pascal(kg/m*s) | 6,4 | 6,4 | 6,4 |
| Blasendurchmesser | mm | 0,23 | 0,23 | 0,23 |
| Auftriebsgeschwindigkeit | m/Sek. | 4,21E-05 | 4,21E-05 | 4,21E-05 |
| Läuterzone | | | | |
| Beckenlänge | m | 6,2 | 7,2 | 8,2 |
| Beckenbreite | m | 7,4 | 8,45 | 9,5 |
| Schichtdicke Vorströmung | m | 0,135 | 0,135 | 0,135 |
| Verweilzeit der Schmelze im Läuterteil | Min. | 53,51 | 51,61 | 51,92 |
| Zeit für Blasenaufstieg | Min. | 53,5 | 51,6 | 52 |

Die nachfolgende Tabelle enthält jeweils in einer Spalte drei Beispiele für die Ausführung einer erfindungsgemäßen Glasschmelzanlage, die dem Ausführungsbeispiel gemäß Fig. 6 entspricht. Die ersten beiden Spalten beinhalten Glasschmelzanlagen für die Herstellung von Behälterglas und in der letzten Spalte sind die Daten für eine Glasschmelzanlage für die Herstellung von Flachglas aufgeführt. Die zweite Spalte beinhaltet die jeweilige Maßeinheit. Die Schwelle 27 wird in der der Tabelle als "Elektrodenwall" bezeichnet. Die Abkürzung EI. steht für Elektroden und mit "Anteil Boosting zu Gesamtenergie" ist das Verhältnis Q_{elec} / (Q_{elec} + Q_{fossil}), d.h. der Anteil der elektrischen Energie an der gesamten zugeführten Wärmeenergie, gemeint, der in % ausgedrückt wird. Der Anteil der elektrischen Beheizung an der Gesamtenergie beträgt in allen drei Fällen, wie der Tabelle entnommen werden kann, mehr als 60 %. In allen drei angegebenen Beispielen steigt eine große Anzahl der in der Schmelze entstehenden Blasen innerhalb der Schmelzwanne bis zur Oberfläche der Glasschmelze auf, so dass eine gute Glasqualität erreicht wird.

| Glasart/Produkt | | Behälterglas | Behälterglas | Flachglas |
|---|---|---|---|---|
| Schmelzleistung | t Glas/Tag | 350,00 | 160,00 | 110,00 |
| Schmelzfläche | m² | 135,42 | 80,04 | 90,00 |
| Länge Schmelzwanne | m | 18,30 | 13,80 | 15,08 |
| Breite Schmelzwanne | m | 7,40 | 5,80 | 6,00 |
| Länge des Elektrodenwalls | m | 2,50 | 1,96 | 2,10 |
| Schmelzteil (10) | m | 13,00 | 10,80 | 9,17 |
| Läuterteil (20) | m | 5,40 | 4,00 | 5,91 |
| Badtiefe Schmelzteil (B1) | m | 1,40 | 1,30 | 1,40 |
| Badtiefe Läuterteil (B2) | m | 1,75 | 1,60 | 1,25 |
| Glas über Elektrodenwall (B5) | m | 0,825 | 0,825 | 0,85 |
| Anzahl Elektroden im Schmelzteil | | 36 | 24 | 24 |
| Anzahl EI. Auf Elektrodenwall | | 6 | 6 | 6 |
| Anteil Boosting zu Gesamtenergie | % | 80 | 64 | 76 |
| Elektrische Energie | kW | 9330 | 5500 | 5250 |
| fossile Energie (Erdgas) | m³/h | 235 | 300 | 155 |
| Heizwert Erdgas | kWh/m³ | 10 | 10,56 | 10 |

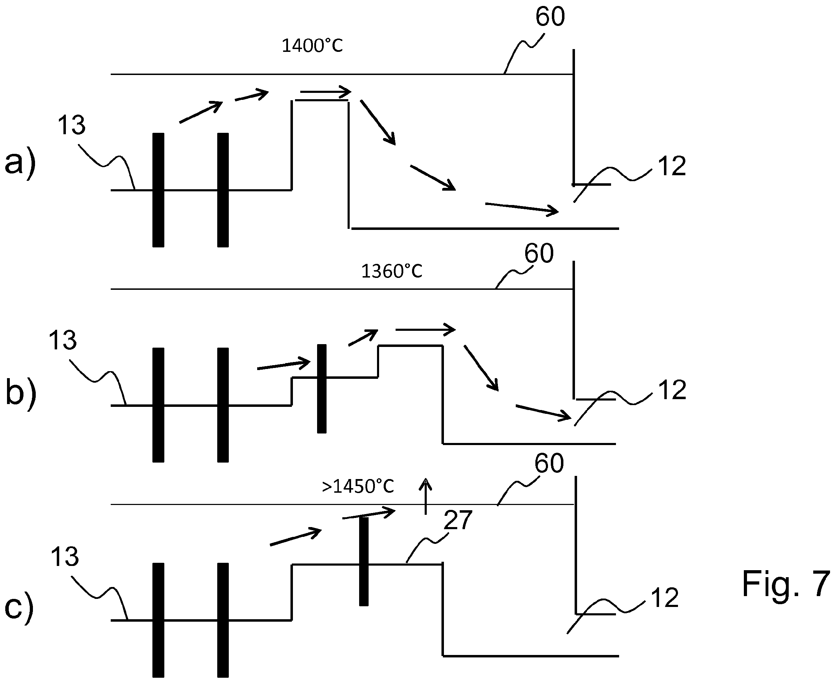

Fig. 7 zeigt einen Vergleich der Konstruktionen der Schmelzwannen nach dem Stand der Technik (Fig. 7 a) und b)) mit der erfindungsgemäßen Lösung (Fig. 7c)) basierend auf mathematischen Modellrechnungen. Fig. 7c) entspricht dem in Fig. 1 gezeigten Ausführungsbeispiel, während Fig. 7a) in etwa die Situation des Dokuments Müller und Fig. 7b) die Ausgestaltung des Dokuments Pieper zeigt. Die Figuren zeigen jeweils das Profil des Bodens 13 der Schmelzwanne im Bereich des Übergangs von dem Schmelzteil zum Läuterteil, die Elektroden (schwarze, dicke, senkrecht verlaufende Balken) sowie die Oberfläche der Glasschmelze 60. Die berechnete Temperatur an der Oberfläche der Glasschmelze über der höchsten Barriere bzw. an der kleinsten Badtiefe ist in der Figur angegeben. Bei der Modellrechnung wurde ein Anteil elektrischer Energie größer als 60 % an der gesamten zugeführten Wärmeenergie zugrunde gelegt. Bei den Simulationen zeigt sich, dass die jeweils angegebene Temperatur an der Oberfläche der Glasschmelze (im Falle Fig. 7a) und b) 1400 °C bzw. 1360°C) zu gering ist und die Blasen, deren Weg in der Glasschmelze durch die Pfeile angedeutet wird, nach Überqueren der Barriere wieder absinken, da sie einen zu geringen Auftrieb haben. Lediglich bei der in Fig. 7c) gezeigten erfindungsgemäßen Lösung ist die Oberflächentemperatur (1450 °C) durch die Beheizung der Schwelle 27 und somit der Auftrieb der Blasen ausreichend, so dass ein signifikanter Anteil der Blasen an die Oberfläche der Glasschmelze steigt und das Gas aus der Glasschmelze entweicht.

Gleiches ergibt sich auch aus dem in Fig. 9 gezeigten Ergebnis von Simulationsrechnungen. Hierbei entspricht die Anordnung der Fig. 9a) der Fig. 7c), die Anordnung der Fig. 9b) der Fig. 7a) und die Anordnung der Fig. 9c) der Fig. 7b). Die Schmelzbadoberfläche betrug 91 m². Für die Simulationen betrug Badtiefe B1 im Schmelzteil 10 in allen Fällen 1500 mm. Die erfindungsgemäße Ausführung (Fig. 9a)) hatte einen Schwelle 27 mit einer Länge von 2100 mm und einer Badtiefe B5 von 800 mm. Die Variante der Fig. 9b) (entspricht Dokument Müller) hatte eine höchste Barrierewand (ohne Elektroden) mit einer Badtiefe von 300 mm im Bereich der Wand. Die Anordnung gemäß Fig. 9c) hatte eine Läuterbank als höchste Barriere (ohne Elektroden) mit einer Länge von 1800 mm und einer Badtiefe über der Läuterbank von 1000 mm. Vor der Läuterbank befinden sich auf einem davor liegenden, tieferen Absatz Elektroden. Der Durchsatz betrug in allen Fällen 250 t/Tag Weißglas mit 45% Scherbenzugabe. Der fossile Energieeintrag betrug 3340 kW und der elektrische Energieeinsatz 5380kW, also etwa 60% der gesamten zugeführten Wärmeenergie.

Es hat sich in den Simulationen gezeigt, dass nur mit einer Schwelle, bei der das über die Schwelle fließende Glas mittels Elektroden aufgeheizt wird, eine ausreichend hohe Temperatur an der Glasbadoberfläche erreicht wird (siehe Fig. 9a), welche das Aufsteigen der Blasen signifikant begünstigt.

Die mathematische Simulation erlaubt es, auch eine Bewertung der Läuterleistung vorzunehmen. Dazu werden in dem Modell Blasen geringer Größe in einer Ebene unterhalb des Glasspiegels im Einschmelzbereich definiert. Das entspricht den Blasen, die bei der Zersetzung der Karbonate beim Einschmelzen der Rohstoffe entstehen. Diese Blasen bewegen sich mit der Strömung durch die Schmelzwanne. Der Temperaturanstieg auf diesem Weg ist Ursache für das Blasenwachstum (Ausdehnung des Gases) und die zunehmende Aufstiegsgeschwindigkeit, dem bekannten Gesetz von Stokes folgend und welches in der mathematischen Simulationsrechnung Berücksichtigung findet. In der Modellbetrachtung lässt sich zeigen, dass nur bei Verwendung einer Schwelle mit an der Oberfläche der Schwelle angeordneten Elektroden die Blasen soweit wachsen und aufsteigen, dass die Glasschmelze nach der Barriere auch blasenfrei ist. In den beiden anderen Fällen gelangt eine deutliche Zahl von Blasen über die Barriere weg in den Entnahmeglasstrom bzw. in das Produkt. Die Berechnung hat bestätigt, dass nur mit der Verwendung einer beheizten Schwelle bei einem großen Anteil von elektrischer Energie, bezogen auf die gesamte zugeführte Wärmeenergie, eine Glasqualität gesichert ist - unter der Randbedingung, dass der Energieeinsatz mit fossilen Brennstoffen deutlich eingeschränkt wird.

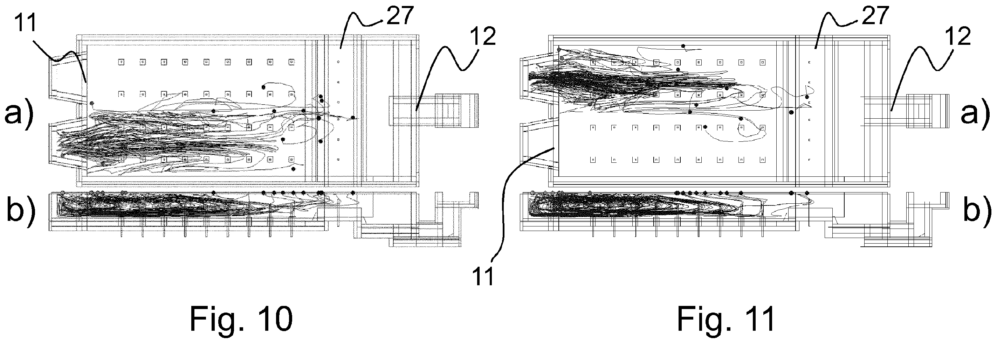

Die obigen Feststellungen werden in den Fig. 10 und 11 anhand des dort gezeigten Wegs der Blasen in der Glasschmelze 60 veranschaulicht. Die Fig. 10 und 11 zeigen jeweils eine Modellrechnung mit einer Aufgabe von jeweils 4000 Blasen mit einem Durchmesser von 0,2 mm im Bereich der Eingangsöffnung 11, wobei in Fig. 10 die Blasen auf der rechten Eingangsseite und in Fig. 12 die Blasen auf der linken Eingangsseite aufgegeben wurden. Die Parameter der Simulation entsprechen den in Bezug auf die Fig. 9 verwendeten Parametern. In den Fig. 10 und 11 wird aus Anschaulichkeitsgründen nur ein kleiner Anteil der berechneten 4000 Blasen gezeigt. In einer realen Glasschmelzwanne liegt außerdem ein Vielfaches der gerechneten Anzahl von 4000 Blasen vor.

Wie bereits oben erläutert wurde, wachsen die Blasen auf ihrem Pfad in der zirkulierenden Glasschmelze 60. Es zeigt sich, dass alle Blasen bis zur Oberfläche aufsteigen. Das Entweichen an der Oberfläche ist mit einem Punkt am Ende der Bewegungslinie der jeweiligen Blase gekennzeichnet. Es gibt bei allen berechneten Blasen in dem Modell keinen Pfad, der sich bis zur Austrittsöffnung 12 erstreckt. Die Simulation zeigt den Fall eines Modells mit beheizter Schwelle und hohem Anteil an elektrischer Energie an der gesamten zugeführten Wärmeenergie.

Bei den in den Fig. 7a) und b) bzw. 9b) und c) dargestellten Fällen (in Fig. 10 und 11 nicht dargestellt), bei denen nur eine einfache Barriere ohne Beheizung vorliegt oder eine Läuterbank, d.h. eine Barriere mit einer Vorstufe aufweisend Elektroden, erreicht demgegenüber einen signifikant hohe Zahl an Blasen die Austrittsöffnung, bleibt somit in der Glasschmelze und vermindert dessen Qualität.

## Patentansprüche

1. Schmelzwanne für die Herstellung einer Glasschmelze (60) aus mindestens einem festen Ausgangsstoff mit
• einer Eingangsöffnung (11) für die Zuführung des mindestens einen Ausgangsstoffs, einer Ausgangsöffnung (12) zum Abfließen des geschmolzenen Glases, wobei die Schmelzwanne derart eingerichtet ist, dass die Glasschmelze (60) während des Schmelzprozesses in eine Fließrichtung von der Eingangsöffnung (11) zur Ausgangsöffnung (12) fließt,
• einem die Schmelzwanne unten begrenzenden Boden (13),
• mindestens zwei, an den Boden (13) angrenzenden, die Schmelzwanne seitlich begrenzenden Seitenwänden (16),
• einer mit den Seitenwänden (16) verbundenen, die Schmelzwanne oben begrenzenden Überdachung (15),
wobei die Schmelzwanne einen Einschmelzabschnitt (10) und einen Läuterabschnitt (20) aufweist, wobei das Glas bei seinem Fließen in Fließrichtung zuerst den Einschmelzabschnitt (10) und danach den Läuterabschnitt (20) passiert,
wobei die Glasschmelze im Einschmelzabschnitt (10) eine erste Badtiefe B1 und im Läuterabschnitt (20) eine zweite Badtiefe B2 aufweist, wobei in einem Übergangsbereich der Schmelzwanne zwischen dem Einschmelzabschnitt (10) und dem Läuterabschnitt (20) eine quer zur Fließrichtung verlaufende Schwelle (27) im Boden (13) der Schmelzwanne angeordnet ist, wobei eine dritte Badtiefe B5 über der Schwelle (27) kleiner als die erste Badtiefe B1 und kleiner als die zweite Badtiefe B2 ist, wobei die Schwelle (27) die höchste Erhebung im Boden der Schmelzwanne mit der geringsten Badtiefe darstellt,
wobei die Schmelzwanne derart eingerichtet ist, dass zum Aufschmelzen des mindestens einen Ausgangsstoffs der Glasschmelze
• ein elektrisch erzeugter, erster Wärmeenergieanteil (Q_{elec}) mittels einer Vielzahl in die Glasschmelze hinein ragenden Elektroden und
• ein mittels Verbrennung von fossilem Brennstoff erzeugter zweiter Wärmeenergieanteil (Q_{fossil}) in mindestens einem in einer Seitenwand (16) und/oder in der Überdachung (15) oberhalb der Glasschmelze angeordneten Brenner (19c)
zugeführt wird, wobei die gesamte zugeführte Wärmeenergie sich aus dem ersten Wärmeenergieanteil und dem zweiten Wärmeenergieanteil zusammensetzt,
wobei die Schmelzwanne derart eingerichtet ist, dass der erste Wärmeenergieanteil mindestens 30 % der gesamten zugeführten Wärmeenergie beträgt,
wobei im Boden (13) der Schmelzwanne in Fließrichtung der Glasschmelze (60) auf der Schwelle (27) eine quer zur Fließrichtung verlaufende erste Elektrodenreihe (21) umfassend eine Vielzahl von Elektroden angeordnet ist,
wobei in dem Einschmelzabschnitt (10) im Boden (13) der Schmelzwanne eine Vielzahl von Elektroden in mindestens einer, in Fließrichtung verlaufenden dritten Elektrodenreihe (19a, 19b) angeordnet ist.

2. Schmelzwanne nach Anspruch 1, **dadurch gekennzeichnet, dass** im Boden (13) der Schmelzwanne in einem Abstand L2 in Fließrichtung hinter der ersten Elektrodenreihe (21) eine quer zur Fließrichtung verlaufende zweite Elektrodenreihe (22) umfassend eine Vielzahl von Elektroden angeordnet ist, wobei der Abstand L2 vorzugsweise zwischen 500 mm und 1000 mm beträgt, wobei die zweite Elektrodenreihe (22) ebenfalls auf der Schwelle (27) angeordnet ist.

3. Schmelzwanne nach einem der vorhergehenden Ansprüche, **dadurch gekennzeichnet, dass** die dritte Badtiefe B5 über der Schwelle (27) zwischen 200 mm und 1000 mm beträgt.

4. Schmelzwanne nach einem der vorhergehenden Ansprüche, **dadurch gekennzeichnet, dass** die erste Badtiefe B1 im Einschmelzabschnitt (10) zwischen 1100 mm, vorzugsweise zwischen 1400 mm, und 2000 mm beträgt und die zweite Badtiefe B2 im Läuterabschnitt (20) zwischen 700 mm und 2800 mm beträgt.

5. Schmelzwanne nach einem der vorhergehenden Ansprüche, **dadurch gekennzeichnet, dass** die auf der Schwelle (27) angeordnete Vielzahl von Elektroden als Stabelektrode und/oder Blockelektrode ausgebildet ist.

6. Schmelzwanne nach einem der vorhergehenden Ansprüche, **dadurch gekennzeichnet, dass** die Länge L4 der Schwelle (27) in Fließrichtung zwischen 700 mm und 3000 mm beträgt.

7. Schmelzwanne nach einem der vorhergehenden Ansprüche, **dadurch gekennzeichnet, dass** der mindestens eine Brenner (19c) zur Zuführung des zweiten Wärmeenergieanteils ausschließlich im Einschmelzabschnitt (10) angeordnet ist, vorzugsweise eine Vielzahl von Brennern (19c), die in einer in Fließrichtung verlaufenden Seitenwand (16) angeordnet sind.

8. Schmelzwanne nach einem der vorhergehenden Ansprüche, **dadurch gekennzeichnet, dass** der mindestens eine Brenner (19c) derart steuerbar ist, dass der von dem mindestens einen Brenner (19c) erzeugte zweite Wärmeenergieanteil (Q_{fossil}) dem Verlust an Wärmeenergie (Q_{wand}) entspricht, der über die Schmelzwanne nach außen abgegeben wird.

9. Schmelzwanne nach einem der vorhergehenden Ansprüche, **dadurch gekennzeichnet, dass** in dem Einschmelzabschnitt (10) und/oder in dem Übergangsbereich zwischen dem Einschmelzabschnitt (10) und dem Läuterabschnitt (20) an der Überdachung eine Strahlungswand (25) angeordnet ist, die quer zur Fließrichtung verläuft, vorzugsweise in einem scheitrechten Bogen.

10. Schmelzwanne nach einem der vorhergehenden Ansprüche, **dadurch gekennzeichnet, dass** in Fließrichtung der Glasschmelze (60) im Boden (13) der Schmelzwanne vor der Schwelle im Boden der Schmelzwanne eine quer zur Fließrichtung verlaufende weitere Elektrodenreihe (23) umfassend eine Vielzahl von Elektroden angeordnet ist.

11. Glasschmelzanlage mit einer Schmelzwanne nach einem der vorhergehenden Ansprüche, einem sich an die Schmelzwanne anschließenden Einschnürungsbereich (30), einem Konditionierbereich (40) und einen Kanal (50).

12. Glasschmelzanlage nach Anspruch 11, **dadurch gekennzeichnet, dass** in dem Einschnürungsbereich (30) an der Überdeckung des Einschnürungsbereichs mindestens ein Kühlelement (32) angeordnet ist.

13. Verfahren zur Herstellung einer Glasschmelze in einer Schmelzwanne nach einem der Ansprüche 1 bis 10 aus mindestens einem festen Ausgangsstoff, wobei der mindestens eine feste Ausgangsstoff der Eingangsöffnung (11) zugeführt wird und das geschmolzene Glas aus der Ausgangsöffnung (12) abfließt, wobei die Glasschmelze während des Schmelzprozesses in eine Fließrichtung von der Eingangsöffnung (11) zur Ausgangsöffnung (12) fließt,
wobei das Glas und/oder der mindestens eine Ausgangsstoff bei seinem Fließen in Fließrichtung in der Schmelzwanne zuerst den Einschmelzabschnitt (10) und danach den Läuterabschnitt (20) sowie die zwischen dem Einschmelzabschnitt (10) und dem Läuterabschnitt (20) quer zur Fließrichtung verlaufende Schwelle (27) im Boden der Schmelzwanne passiert, wobei die dritte Badtiefe B5 über der Schwelle (27) kleiner als die erste Badtiefe B1 und kleiner als die zweite Badtiefe B2 ist, wobei die Schwelle (27) die höchste Erhebung im Boden der Schmelzwanne mit der geringsten Badtiefe darstellt,
wobei der Glasschmelze zum Aufschmelzen des mindestens einen Ausgangsstoffs
• der elektrisch erzeugte, erster Wärmeenergieanteil (Q_{elec}) mittels der Vielzahl in die Glasschmelze hinein ragenden Elektroden und
• der mittels Verbrennung von fossilem Brennstoff erzeugte zweite Wärmeenergieanteil (Q_{fossil}) mittels dem mindestens einen in einer Seitenwand (16) und/oder in der Überdachung (15) oberhalb der Glasschmelze (60) angeordneten Brenner (19c)
zugeführt wird, wobei die gesamte zugeführte Wärmeenergie sich aus dem ersten Wärmeenergieanteil und dem zweiten Wärmeenergieanteil zusammensetzt,
wobei der erste Wärmeenergieanteil mindestens 30 % und höchstens 98 % der gesamten zugeführten Wärmeenergie beträgt,
wobei mindestens ein Teil des ersten Wärmeenergieanteils mittels auf der Schwelle (27) im Boden (13) der Schmelzwanne einer quer zur Fließrichtung verlaufende erste Elektrodenreihe (21) umfassend eine Vielzahl von Elektroden erzeugt wird.

14. Verfahren nach Anspruch 13, **dadurch gekennzeichnet, dass** der mindestens eine Brenner (19c) derart geregelt oder gesteuert wird, dass der von dem mindestens einen Brenner erzeugte zweite Wärmeenergieanteil dem Verlust an Wärmeenergie (Q_{wand}) entspricht, der über die Schmelzwanne nach außen abgegeben wird.

## Claims

1. A melt tank for the production of a glass melt (60) from at least one solid starting material, the melt tank comprising:
• an inlet opening (11) for a supply of the at least one solid starting material, an outlet opening (12) for an outflow of the molten glass, the melt tank configured in such a way that the glass melt (60) flows in a direction of flow from the inlet opening (11) to the outlet opening (12) during the melt process;
• a floor (13) that limits the melt tank at a bottom;
• at least two side walls (16) that adjoin the floor (13) and that laterally limit the melt tank;
• a roof (15) that is connected to the side walls (16) and that limits the melt tank at a top,
wherein the melt tank includes a melting segment (10) and a refining segment (20), the glass melt first passing through the melting segment (10) and subsequently through the refining segment (20) when flowing in the direction of flow,
the glass melt having a first bath depth B1 in the melting segment (10) and having a second bath depth B2 in the refining segment (20), a threshold (27) running transverse to the direction of flow being situated in the floor (13) of the melt tank in a transition area of the melt tank between the melting segment (10) and the refining segment (20), a third bath depth B5 over the threshold (27) being smaller than the first bath depth B1 and smaller than the second bath depth B2, wherein the threshold (27) forms the highest raised part in the floor of the melt tank with a smallest bath depth,
the melt tank being configured such that for the melting of the at least one starting material of the glass melt is supplied:
• an electrically produced, first heat energy portion (Q_{elec}) by means of a multiplicity of electrodes that extend into the glass melt, and
• a second heat energy portion (Q_{fossil}), produced by a combustion of fossil fuel, by means of at least one burner (19c) situated in a side wall (16) and/or in the roof (15) above the glass melt,
wherein the total supplied heat energy being made up of the first heat energy portion and the second heat energy portion,
wherein the melt tank is configured in such a way that the first heat energy portion comprises at least 30% of the total supplied heat energy,
wherein a first row of electrodes (21) running transverse to the direction of the glass melt (60) flow is situated in the floor (13) of the melt tank on the threshold (27), the first row comprising a multiplicity of electrodes,
wherein in the melting segment (10), in the floor (13) of the melt tank, a multiplicity of electrodes is situated in at least one third row of electrodes (19a, 19b), the third row running in the direction of flow.

2. The melt tank according to claim 1, **characterized in that** a second row of electrodes (22), is situated in the floor (13) of the melt tank at a distance L2 after the first row of electrodes (21) in the direction of flow, wherein the second row of electrodes (22) including a multiplicity of electrodes and the second row of electrodes running transverse to the direction of flow, wherein the distance L2 is preferably between 500 mm and 1,000 mm, wherein the second row of electrodes (22) also being situated on the threshold (27).

3. The melt tank according to any one of the preceding claims, **characterized in that** the third bath depth B5 over the threshold (27) is between 200 mm and 1,000 mm.

4. The melt tank according to any one of the preceding claims, **characterized in that** the first bath depth B1 in the melting segment (10) is between 1,100 mm, preferably between 1,400 mm, and 2,000 mm, and the second bath depth B2 in the refining segment (20) is between 700 mm and 2,800 mm.

5. The melt tank according to any one of the preceding claims, **characterized in that** the multiplicity of electrodes situated on the threshold (27) are rod electrodes and/or block electrodes.

6. The melt tank according to any one of the preceding claims, **characterized in that** the length L4 of the threshold (27) is between 700 mm and 3,000 mm in the direction of flow.

7. The melt tank according to any one of the preceding claims, **characterized in that** the at least one burner (19c) for supplying the second heat energy portion is situated exclusively in the melting segment (10), preferably a multiplicity of burners (19c) situated in a side wall (16) running in the direction of flow.

8. The melt tank according to any one of the preceding claims, **characterized in that** the at least one burner (19c) is controllable in such a way that the second heat energy portion (Q_{fossil}) produced by the at least one burner (19c) corresponds to the loss of heat energy (Q_{wall}) that is emitted to an outside via the melt tank.

9. The melt tank according to any one of the preceding claims, **characterized in that** a radiation wall (25) is situated on the roof, in the melting segment (10) and/or in the transition area between the melting segment (10) and the refining segment (20), the radiation wall running transverse to the direction of flow, preferably in a straight arc.

10. The melt tank according to any one of the preceding claims, **characterized in that** a further row of electrodes (23) is situated in the floor (13) of the melt tank, in front of the threshold in the floor of the melt tank in the direction of flow of the glass melt (60), the further row including a multiplicity of electrodes and running transverse to the direction of flow.

11. A glass melting plant comprising a melt tank according to any one of the preceding claims, a constriction region (30) following the melt tank, a conditioning region (40), and a channel (50).

12. The glass melting plant according to claim 11, **characterized in that** at least one cooling element (32) is situated in the constriction region (30), on a cover of the constriction region.

13. A method for the production of a glass melt in a melt tank according to any one of claims 1 to 10 from at least one solid starting material, wherein the at least one solid starting material is supplied to the inlet opening (11) and the molten glass flows out of the outlet opening (12), wherein the glass melt flows in a direction of flow from the inlet opening (11) to the outlet opening (12) during the melt process;
wherein the glass melt and/or the at least one starting material first passing through the melting segment (10) and subsequently through the refining segment (20) when flowing in the direction of flow as well as the threshold (27) in the floor of the melt tank, which runs transversely to the direction of flow between the melting segment (10) and the refining segment (20), wherein the third bath depth B5 over the threshold (27) being smaller than the first bath depth B1 and smaller than the second bath depth B2, wherein the threshold (27) forms the highest raised part in the floor of the melt tank with a smallest bath depth,
the melt tank being configured such that for the melting of the at least one starting material of the glass melt is supplied:
• the electrically produced, first heat energy portion (Q_{elec}) by means of a multiplicity of electrodes that extend into the glass melt, and
• the second heat energy portion (Q_{fossil}), produced by a combustion of fossil fuel, by means of the at least one burner (19c) situated in a side wall (16) and/or in the roof (15), above the glass melt (60),
wherein the total supplied heat energy being made up of the first heat energy portion and the second heat energy portion,
wherein the first heat energy portion comprises at least 30% and at most 98% of the total supplied heat energy,
wherein at least part of the first heat energy portion is generated by means of a first row of electrodes (21) extending on the threshold (27) in the floor (13) of the melt tank, running transverse to the direction of flow, comprising a multiplicity of electrodes.

14. The method according to claim 13, **characterized in that** the at least one burner (19c) is regulated or controlled in such a way that the second heat energy portion produced by the at least one burner corresponds to the loss of heat energy (Q_{wall}) that is emitted to an outside via the melt tank.

## Revendications

1. Bassin pour la fusion du verre (60) à partir d'au moins une matière première solide avec
• une ouverture d'entrée (11) pour l'introduction de l'au moins une matière première, une ouverture de sortie (12) pour l'écoulement du verre fondu, le bassin étant conçu de sorte que, pendant le processus de fusion, le bain de fusion du verre (60) s'écoule dans une direction d'écoulement allant de l'ouverture d'entrée (11) vers l'ouverture de sortie (12),
• un fond (13) délimitant le bassin en bas,
• au moins deux parois latérales (16) adjacentes au fond (13) et délimitant latéralement le bassin,
• un élément de couverture (15) relié aux parois latérales (16) et délimitant le bassin en haut,
le bassin présentant une section de fusion (10) et une section d'affinage (20), le verre traversant d'abord la section de fusion (10) puis la section d'affinage (20) lors de son écoulement dans la direction d'écoulement, le bain de fusion du verre présentant une première profondeur de bain B1 dans la section de fusion (10) et une deuxième profondeur de bain B2 dans la section d'affinage (20), dans lequel un seuil (27) s'étendant transversalement à la direction d'écoulement est disposé dans le fond (13) du bassin, dans une zone de transition du bassin entre la section de fusion (10) et la section d'affinage (20), dans lequel une troisième profondeur de bain B5 au-dessus du seuil (27) est inférieure à la première profondeur de bain B1 et inférieure à la deuxième profondeur de bain B2, le seuil (27) représentant la plus haute élévation dans le fond du bassin avec la profondeur de bain la plus faible,
le bassin étant conçu de sorte que, pour la fusion de l'au moins une matière première pour le bain de fusion du verre,
• une première part d'énergie thermique produite électriquement (Q_{élec}) soit apportée au moyen d'une pluralité d'électrodes plongeant dans le bain de fusion du verre et
• une seconde part d'énergie thermique produite par la combustion d'un combustible fossile (Q_{fossile}) soit apportée dans au moins un brûleur (19c) disposé dans une paroi latérale (16) et/ou dans l'élément de couverture (15) au-dessus du bain de fusion du verre,
l'énergie thermique totale apportée étant composée de la première part d'énergie thermique et de la seconde part d'énergie thermique,
le bassin étant conçu de sorte que la première part d'énergie thermique représente au moins 30 % de l'énergie thermique totale apportée,
dans lequel une première rangée d'électrodes (21) comprenant une pluralité d'électrodes et s'étendant transversalement à la direction d'écoulement est disposée dans le fond (13) du bassin dans la direction d'écoulement du bain de fusion du verre (60) sur le seuil (27),
dans lequel, dans la section de fusion (10), une pluralité d'électrodes est disposée dans le fond (13) du bassin en au moins une troisième rangée d'électrodes (19a, 19b) s'étendant dans la direction d'écoulement.

2. Bassin selon la revendication 1, **caractérisé en ce qu'**une deuxième rangée d'électrodes (22) s'étendant transversalement à la direction d'écoulement et comprenant une pluralité d'électrodes est disposée dans le fond (13) du bassin à une distance L2 dans la direction d'écoulement en aval de la première rangée d'électrodes (21), la distance L2 étant de préférence comprise entre 500 mm et 1000 mm, la deuxième rangée d'électrodes (22) étant également disposée sur le seuil (27).

3. Bassin selon l'une quelconque des revendications précédentes, **caractérisé en ce que** la troisième profondeur de bain B5 au-dessus du seuil (27) est comprise entre 200 mm et 1000 mm.

4. Bassin selon l'une quelconque des revendications précédentes, **caractérisé en ce que** la première profondeur de bain B1 dans la section de fusion (10) est comprise entre 1100 mm, de préférence entre 1400 mm, et 2000 mm, et **en ce que** la deuxième profondeur de bain B2 dans la section d'affinage (20) est comprise entre 700 mm et 2800 mm.

5. Bassin selon l'une quelconque des revendications précédentes, **caractérisé en ce que** la pluralité d'électrodes disposée sur le seuil (27) est réalisée sous forme d'électrodes en tige et/ou d'électrodes en bloc.

6. Bassin selon l'une quelconque des revendications précédentes, **caractérisé en ce que** la longueur L4 du seuil (27) dans la direction d'écoulement est comprise entre 700 mm et 3000 mm.

7. Bassin selon l'une quelconque des revendications précédentes, **caractérisé en ce que** l'au moins un brûleur (19c) destiné à l'apport de la seconde part d'énergie thermique est disposé exclusivement dans la section de fusion (10), de préférence une pluralité de brûleurs (19c) qui sont disposés dans une paroi latérale (16) s'étendant dans la direction d'écoulement.

8. Bassin selon l'une quelconque des revendications précédentes, **caractérisé en ce que** l'au moins un brûleur (19c) peut être commandé de sorte que la seconde part d'énergie thermique (Q_{fossile}) produite par l'au moins un brûleur (19c) corresponde à la perte d'énergie thermique (Qₚₐᵣₒᵢ) cédée vers l'extérieur par le bassin.

9. Bassin selon l'une quelconque des revendications précédentes, **caractérisé en ce que**, dans la section de fusion (10) et/ou dans la zone de transition entre la section de fusion (10) et la section d'affinage (20), une paroi de rayonnement (25) est disposée sur l'élément de couverture, paroi qui s'étend transversalement à la direction d'écoulement, de préférence sous la forme d'un arc plat.

10. Bassin selon l'une quelconque des revendications précédentes, **caractérisé en ce qu'**une autre rangée d'électrodes (23) comprenant une pluralité d'électrodes et s'étendant transversalement à la direction d'écoulement est disposée dans le fond (13) du bassin, en amont du seuil dans la direction d'écoulement du bain de fusion du verre (60).

11. Installation de fusion du verre comportant un bassin selon l'une quelconque des revendications précédentes, une zone de rétrécissement (30) adjacente au bassin, une zone de conditionnement (40) et un canal (50).

12. Installation de fusion du verre selon la revendication 11, **caractérisée en ce qu'**au moins un élément de refroidissement (32) est disposé dans la zone de rétrécissement (30) au niveau de l'élément de couverture de la zone de rétrécissement.

13. Procédé de fusion du verre dans un bassin selon l'une quelconque des revendications 1 à 10, à partir d'au moins une matière première solide, dans lequel l'au moins une matière première solide est introduite par l'ouverture d'entrée (11) et le verre fondu s'écoule hors de l'ouverture de sortie (12), dans lequel, pendant le processus de fusion, le bain de fusion du verre s'écoule dans une direction d'écoulement allant de l'ouverture d'entrée (11) vers l'ouverture de sortie (12),
dans lequel le verre et/ou l'au moins une matière première, lors de son écoulement dans la direction d'écoulement dans le bassin, traverse d'abord la section de fusion (10) puis la section d'affinage (20) ainsi que le seuil (27) s'étendant transversalement à la direction d'écoulement entre la section de fusion (10) et la section d'affinage (20) dans le fond du bassin, dans lequel la troisième profondeur de bain B5 au-dessus du seuil (27) est inférieure à la première profondeur de bain B1 et inférieure à la deuxième profondeur de bain B2, le seuil (27) représentant la plus haute élévation dans le fond du bassin avec la profondeur de bain la plus faible,
dans lequel, pour la fusion de l'au moins une matière première, sont apportées au bain de fusion du verre
• la première part d'énergie thermique produite électriquement (Q_{élec}) au moyen de la pluralité d'électrodes plongeant dans le bain de fusion du verre et
• la seconde part d'énergie thermique produite par la combustion d'un combustible fossile (Q_{fossile}) au moyen de l'au moins un brûleur (19c) disposé dans une paroi latérale (16) et/ou dans l'élément de couverture (15) au-dessus du bain de fusion du verre (60),
l'énergie thermique totale apportée étant composée de la première part d'énergie thermique et de la seconde part d'énergie thermique, la première part d'énergie thermique représentant au moins 30 % et au plus 98 % de l'énergie thermique totale apportée,
dans lequel au moins une partie de la première part d'énergie thermique est produite au moyen d'une première rangée d'électrodes (21) comprenant une pluralité d'électrodes et s'étendant transversalement à la direction d'écoulement, disposée sur le seuil (27) dans le fond (13).

14. Procédé selon la revendication 13, **caractérisé en ce que** l'au moins un brûleur (19c) est régulé ou commandé de sorte que la seconde part d'énergie thermique produite par l'au moins un brûleur corresponde à la perte d'énergie thermique (Qₚₐᵣₒᵢ) cédée vers l'extérieur par le bassin.
